(19)

**Europäisches Patentamt**
**European Patent Office**
**Office européen des brevets**

(11) **EP 4 432 711 A1**

(12) **EUROPEAN PATENT APPLICATION**
published in accordance with Art. 153(4) EPC

(43) Date of publication:
**18.09.2024 Bulletin 2024/38**

(21) Application number: **22903587.8**

(22) Date of filing: **08.12.2022**

(51) International Patent Classification (IPC):
*H04W 8/22* (2009.01)    *H04W 8/24* (2009.01)
*H04L 41/14* (2022.01)    *G06N 3/04* (2023.01)
*G06N 3/06* (2006.01)    *G06N 3/08* (2023.01)
*G06N 20/20* (2019.01)

(52) Cooperative Patent Classification (CPC):
**G06N 3/04; G06N 3/06; G06N 3/08; G06N 20/20;**
**H04L 41/14; H04W 8/22; H04W 8/24**

(86) International application number:
**PCT/CN2022/137671**

(87) International publication number:
**WO 2023/104169 (15.06.2023 Gazette 2023/24)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.12.2021 CN 202111505116**

(71) Applicant: **Huawei Technologies Co., Ltd.**
**Shenzhen, Guangdong 518129 (CN)**

(72) Inventors:
• **ZHU, Yonghe**
  **Shenzhen, Guangdong 518129 (CN)**
• **ZENG, Qinghai**
  **Shenzhen, Guangdong 518129 (CN)**
• **ZENG, Yu**
  **Shenzhen, Guangdong 518129 (CN)**
• **GENG, Tingting**
  **Shenzhen, Guangdong 518129 (CN)**

(74) Representative: **Maiwald GmbH**
**Engineering**
**Elisenhof**
**Elisenstrasse 3**
**80335 München (DE)**

(54) **ARTIFICIAL INTELLIGENCE (AI) MODEL TRAINING METHOD AND APPARATUS IN WIRELESS NETWORK**

(57) A method and apparatus for training an artificial intelligence AI model in a wireless network are provided. The method includes: sending first configuration information to a terminal participating in federated learning, where the first configuration information is used to configure at least one of the following: training duration, a time-frequency resource, and a reporting moment; and same training duration, a same time-frequency resource, and a same reporting moment are configured for different terminals participating in federated learning; and receiving a signal obtained through over-the-air superposition of gradients reported by the terminals, where the gradients are gradients that are of an AI model whose training is completed within the training duration and that are reported by the terminals at the reporting moment by using the time-frequency resource. According to the method and the apparatus in this application, problems such as excessively high time-frequency resource usage and a large delay that are caused because edge nodes participating in federated learning need to use mutually orthogonal uplink time-frequency resources can be resolved.

FIG. 4

**Description**

**CROSS-REFERENCE TO RELATED APPLICATIONS**

This application claims priority to Chinese Patent Application No. 202111505116.7, filed with the China National Intellectual Property Administration on December 10, 2021 and entitled "METHOD FOR TRAINING ARTIFICIAL INTELLIGENCE AI MODEL IN WIRELESS NETWORK AND APPARATUS", which is incorporated herein by reference in its entirety.

**TECHNICAL FIELD**

Embodiments of this application relate to the field of artificial intelligence (artificial intelligence, AI), and in particular, to a method and apparatus for training an AI model in a wireless network.

**BACKGROUND**

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or an ultra-large connection. Due to such a feature, network planning, network configuration, and/or resource scheduling are/is increasingly complex. These new requirements, scenarios, and features bring unprecedented challenges to network planning, operation and maintenance, and efficient operation. To meet these challenges, an artificial intelligence technology may be introduced into the wireless communication network, to implement network intelligence. Federated learning is a popular model training architecture in which distributed data located on an edge device can be invoked to participate in model training without compromising privacy. In federated learning, a central node and the edge device need to exchange parameters or gradients of an artificial intelligence (artificial intelligence, AI) model. How to deploy federated learning in a wireless network is a problem worth studying.

**SUMMARY**

This application provides a method and apparatus for training an AI model in a wireless network, so that when federated learning is deployed in the wireless network, problems such as excessively high time-frequency resource usage and a large delay that are caused because edge nodes participating in federated learning need to use mutually orthogonal uplink time-frequency resources are resolved.

According to a first aspect, a method for training an artificial intelligence AI model in a wireless network is provided. The method is executed by a second node, may be executed by a component (a processor, a chip, or the like) configured in a second node, or may be executed by a software module. The method includes: sending first configuration information to a terminal participating in federated learning, where the first configuration information is used to configure at least one of the following: training duration, a time-frequency resource, and a reporting moment; and same training duration, a same time-frequency resource, and a same reporting moment are configured for different terminals participating in federated learning; and receiving a signal obtained through over-the-air superposition of gradients reported by the terminals participating in federated learning, where the gradients are gradients that are of an AI model whose training is completed within the training duration and that are reported by the terminals at the reporting moment by using the time-frequency resource.

It should be noted that in descriptions of this application, the second node may also be referred to as an access network device, and a first node may also be referred to as a central node or the like. In the foregoing design, the same training duration, the same time-frequency resource, and the same reporting moment are configured by the access network device (which may be referred to as the second node) or the central node (which may be referred to as the first node) for the terminals participating in federated learning. For example, a quantity of the terminals participating in federated learning is n. In this application, the access network device or the central node allocates a same time-frequency resource to the n terminals. In comparison with a conventional solution in which n orthogonal time-frequency resources are allocated to the n terminals participating in federated learning, overheads of the time-frequency resources can be reduced. In addition, if the n orthogonal time-frequency resources are allocated to the n terminals participating in federated learning, each terminal reports a gradient of the AI model by using a respective time-frequency resource. The access network device may receive n radio frequency signals, and separately process the n radio frequency signals, to restore a gradient reported by each terminal. Consequently, a delay is large. However, in this application, the access network device allocates one time-frequency resource to the n terminals participating in federated learning, and the n terminals report gradients on the time-frequency resource. Therefore, based on a superposition property of a wireless channel, the n gradients are superposed together during over-the-air transmission. For example, a value of n is 3, a gradient reported by a terminal 1 is Y1, a gradient reported by a terminal 2 is Y2, and a gradient reported by a terminal 3 is Y3. In this case, the foregoing three gradients are transmitted on a same time-frequency resource, and the foregoing three gradients are superposed together. It is assumed that a wireless channel meets perfect signal superposition (where fading, interference, noise, and the like may be ignored). In this case, a superposed signal is: Y=Y1+Y2+Y3. When the channel does not meet the perfect signal superposition, after receiving the foregoing signal on the foregoing time-frequency resource, the access network device may perform signal processing on the received signal, to restore a superposed signal Y, and the terminals may perform gradient aggregation by using the superposed signal Y A process of the gradient aggregation may be a process of calculating an arithmetic average. For example, the superposed signal Y may be divided by 3, and a result is used as an aggregation gradient. According to the solution of this application, the superposed signal Y may be obtained by processing one radio frequency signal. However, in an existing solution, three radio frequency signals in different slots need to be sequentially processed to restore corresponding gradients, and then aggregation is further performed. By using the solution of this application, usage of time-frequency resources can be reduced to some extent, and a delay of the gradient aggregation can be reduced.

It should be understood that the training duration configured by the second node (or referred to as the access network device) for the terminal may not be actual training duration of the terminal, but is an upper limit of time required by the terminal for each round of training. In other words, the terminal completes a current round of model training within the training duration, and reports a training completion indication to a base station. Otherwise, the terminal may end the current round of model training, and wait for next training duration to arrive. In this application, the training duration is set to ensure that the different terminals can simultaneously report the gradients of model training to the access network device. Optionally, the gradient that is of the model training and that is reported by the terminal to the access network device is a gradient in the current round of model training, instead of a gradient in another round of model training, for example, a gradient in a previous round of model training. For example, the training duration may be a global parameter determined by comprehensively considering computing capabilities of the terminals participating in federated learning, complexity of the model, and the like.

In a possible design, the method further includes: receiving a training completion indication from the terminal, where the training completion indication is sent by the terminal to a second node when the training of the AI model is completed within the training duration; and collecting, based on the training completion indication sent by the terminal, statistics on a quantity of terminals that complete the training of the AI model within the training duration.

In a possible design, the method further includes: if the quantity of terminals that complete the training of the AI model is greater than or equal to a terminal quantity threshold, determining an average gradient in a current round of model training based on the gradients reported by the different terminals participating in federated learning; or otherwise, using an average gradient in a previous round of model training as an average gradient in a current round of model training; and updating a parameter of the AI model based on the average gradient in the current round of model training, and sending the average gradient in the current round of model training to the terminal.

According to the foregoing design, the first node may determine the terminal quantity threshold. When over-the-air computation is introduced into the federated learning, the quantity of terminals participating in federated learning affects accuracy of calculating the average gradient in the current round of model training. The first node may set the terminal quantity threshold. When the quantity of terminals that report the gradients is greater than or equal to the terminal quantity threshold, the average gradient in the current round of model training is calculated and sent to the terminal; or otherwise, the average gradient in the previous round of model training is sent to the terminal, or the average gradient in the previous round of model training is used as the average gradient in the current round of model training and sent to the terminal, to ensure that accuracy of the calculated average gradient in the current round of model training meets a requirement.

In a possible design, the method further includes: sending, to a first node, a quantity of terminals that complete the training of the AI model within the training duration and the signal obtained through the over-the-air superposition of the gradients reported by the terminals.

In a possible design, the first configuration information is further used to configure at least one of the following: a dedicated bearer RB resource, a modulation scheme, an initial AI model, or a transmit power.

In a possible design, a process of determining the transmit power includes: measuring a sounding reference signal SRS from the terminal, to determine uplink channel quality of the terminal; and determining the transmit power of the terminal based on the uplink channel quality.

According to the foregoing design, the second node determines an optimal transmit power by measuring an uplink channel, and configures the transmit power for the terminal to send the gradient in the current round of model training, thereby improving precision of the over-the-air computation, and further improving accuracy of the gradient aggregation.

In a possible design, the first configuration information is further used to configure at least one of the following: a dedicated bearer RB resource, a modulation scheme, an initial AI model, a channel state information CSI interval, or a channel inversion parameter.

In a possible design, the method further includes: receiving second configuration information from the first node, where the second configuration information is used to configure at least one of the following: a list of terminals participating in federated learning, the initial AI model, a group temporary identifier, the training duration, the terminal quantity threshold, a size of a transport block, or an uplink requirement.

In a possible design, the method further includes: receiving first terminal information from the terminal, and sending second terminal information to the first node, where the first terminal information includes at least one of the following: a communication capability of the terminal, a computing capability of the terminal, or a data set feature of the terminal; and the second terminal information includes at least one of the following: the communication capability of the terminal, the computing capability of the terminal, the data set feature of the terminal, or a terminal temporary identifier, where the terminal temporary identifier is allocated by the second node to the terminal.

In this design, the communication capability of the terminal includes, for example, a maximum transmit power that can be supported by the terminal, an antenna configuration of the terminal, and the like. The computing capability of the terminal includes, for example, performance of a central processing unit (central processing unit, CPU), performance of a graphics processing unit (graphics processing unit, GPU), storage space, and a quantity of electricity. The data set feature of the terminal includes, for example, a size of a data set, distribution of the data set, whether the data set is completed, and whether a label of a data set is completed. Optionally, the data set may be further divided into a training set, a validation set, and a test set based on a percentage. For example, 60% of the data set is the training set, 20% of the data set is the validation set, and 20% of the data set is the test set. It may be understood that the training set is used to train the AI model, the validation set is used to evaluate a trained AI model, and the test set is used to test the trained AI model. Terminal temporary identifier: The identifier may be a cell radio network temporary identifier (cell radio network temporary identifier, C-RNTI), another temporary identifier, or the like.

In a possible design, the method further includes: when a model training end condition is met, sending a model training end indication to the terminal; or receiving a model training end indication from the first node, and forwarding the model training end indication to the terminal.

According to a second aspect, a method for training an artificial intelligence AI model in a wireless network is provided. The method corresponds to the first aspect. For beneficial effects, refer to the descriptions of the first aspect. The method is executed by a terminal, may be executed by a component (a processor, a chip, or another component) configured in a terminal, or may be executed by a software module, or the like. The method includes: receiving first configuration information from a second node, where the first configuration information is used to configure at least one of the following: training duration, a time-frequency resource, and a reporting moment; and same training duration, a same time-frequency resource, and a same reporting moment are configured for different terminals participating in federated learning; training an AI model within the training duration, to obtain a gradient of the AI model in a current round of model training; and reporting the gradient of the AI model in the current round of model training to the second node at the reporting moment by using the time-frequency resource.

In a possible design, the method further includes: when the training duration ends, if the training of the AI model is completed, sending a training completion indication to the second node.

In a possible design, the method further includes: if the training of the AI model is not completed within the training duration, ending the training of the AI model.

In a possible design, the method further includes: receiving an average gradient in a previous round of model training from the second node; and updating the gradient of the AI model in the current round of model training based on the average gradient in the previous round of model training; or updating a parameter and the gradient that of the AI model in the current round of model training based on an average gradient in the current round of model training.

In a possible design, the first configuration information is further used to configure at least one of the following: a dedicated bearer RB resource, a modulation scheme, an initial AI model, or a transmit power.

In a possible design, the first configuration information is further used to configure at least one of the following: a dedicated bearer RB resource, a modulation scheme, an initial AI model, a channel state information CSI interval, or a channel inversion parameter.

In a possible design, when the first configuration information is further used to configure the channel state information CSI interval and the channel inversion parameter, the method further includes: if a same frequency resource is configured for a downlink channel and an uplink channel, determining CSI of the uplink channel of the terminal based on measured CSI of the downlink channel; if the CSI of the uplink channel meets a requirement of the CSI interval, determining the transmit power based on the channel inversion parameter; and the reporting the gradient of the AI model in the current round of model training to the second node includes: reporting the gradient of the AI model in the current round of model training to the second node based on the determined transmit power.

In a possible design, the first configuration information further includes a group temporary identifier, and the group temporary identifier is a group temporary identifier allocated by a first node to the terminal.

In a possible design, the method further includes: receiving a scheduling indication from the second node, where the scheduling indication includes a group temporary identifier; and when the group temporary identifier included in the scheduling indication is the same as the group temporary identifier allocated by the first node to the terminal, performing the training of the AI model in the current round of model training; or otherwise, skipping performing the training of the AI model in the current round of model training.

In a possible design, the method further includes: receiving a model training end indication from the second node; and ending the training of the AI model based on the model training end indication.

In a possible design, the method further includes: sending first terminal information to the second node, where the first terminal information includes at least one of the following: a communication capability of the terminal, a computing capability of the terminal, or a data set feature of the terminal.

According to a third aspect, a method for training an artificial intelligence AI model in a wireless network is provided. The method corresponds to the first aspect. For beneficial effects, refer to the descriptions of the first aspect. The method is executed by a first node, may be executed by a component (a processor, a chip, or another component) configured in a first node, or may be executed by a software module, or the like. The method includes: determining second configuration information, where the second configuration information is used to configure at least one of the following: a list of terminals participating in federated learning, an initial AI model, a group temporary identifier, training duration, a terminal quantity threshold, a size of a transport block, or an uplink requirement; and sending the second configuration information to a second node.

In a possible design, the method further includes: receiving second terminal information from the second node, where the second terminal information includes at least one of the following: a communication capability of a terminal, a computing capability of the terminal, a data set feature of the terminal, or a terminal temporary identifier, where the terminal temporary identifier is allocated by the second node to the terminal; and determining, based on the terminal information, the list of terminals participating in federated learning.

In a possible design, the method further includes: receiving, from the second node, a signal obtained through over-the-air superposition of gradients reported by the terminals participating in federated learning, and a quantity of terminals that complete training of an AI model within the training duration; if the quantity of terminals that complete the training of the model within the training duration is greater than or equal to the terminal quantity threshold, determining an average gradient in a current round of model training based on the gradients that are of the AI model and that are reported by the terminals; or otherwise, using an average gradient in a previous round of model training as an average gradient in a current round of model training; and updating a parameter of the AI model based on the average gradient in the current round of model training, and sending the average gradient in the current round of model training to the second node, to enable the second node to send the average gradient in the current round of model training to the terminal.

In a possible design, the method further includes: sending a scheduling indication to the second node, where the scheduling indication includes a group temporary identifier, and the scheduling indication is used to schedule a terminal corresponding to the group temporary identifier, to perform the training of the AI model in the current round of model training.

In a possible design, the method further includes: when a model training end condition is met, sending a model training end indication to the second node, to indicate the terminal to end the training of the AI model in the current round of model training.

According to a fourth aspect, an apparatus is provided. The apparatus includes units or modules that are in one-to-one correspondence with the method/operations/steps/actions described in the first aspect, the second aspect, or the third aspect. The unit or module may be a hardware circuit, or may be software, or may be implemented by a hardware circuit in combination with software.

According to a fifth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the first aspect, the second aspect, or the third aspect.

According to a sixth aspect, an apparatus is provided, and includes a processor and an interface circuit. The processor is configured to communicate with another apparatus through the interface circuit, and perform the method described in any one of the first aspect, the second aspect, or the third aspect. There are one or more processors.

According to a seventh aspect, an apparatus is provided, and includes a processor coupled to a memory. The processor is configured to execute a program stored in the memory, to perform the method described in any one of the first aspect, the second aspect, or the third aspect. The memory may be located inside or outside the apparatus. In addition, there may be one or more processors.

According to an eighth aspect, a chip system is provided, and includes a processor or a circuit, configured to perform the method described in any one of the first aspect, the second aspect, or the third aspect.

According to a ninth aspect, a computer-readable storage medium is provided. The computer-readable storage medium stores a computer program or instructions. When the computer program or the instructions are executed by an apparatus, the apparatus is enabled to perform the method in the first aspect, the second aspect, or the third aspect.

According to a tenth aspect, a computer program product is provided. The computer program product includes a computer program or instructions. When the computer program or the instructions are executed by an apparatus, the apparatus is enabled to perform the method in the first aspect, the second aspect, or the third aspect.

According to an eleventh aspect, a system is provided, and includes an apparatus for performing the method in the first aspect and an apparatus for performing the method in the second aspect. Optionally, the apparatus may further include an apparatus for performing the method in the third aspect.

## BRIEF DESCRIPTION OF DRAWINGS

FIG. 1 is a diagram of a network architecture according to this application;
FIG. 2a and FIG. 2b are diagrams of a neural network according to this application;
FIG. 2c is a diagram of an AI model according to this application;
FIG. 3 is a diagram of federated learning training according to this application;
FIG. 4 and FIG. 5A and FIG. 5B are schematic flowcharts according to this application;
FIG. 6 is a diagram of channel measurement according to this application;
FIG. 7A to FIG. 7C and FIG. 8A to FIG. 8D are other schematic flowcharts according to this application; and
FIG. 9 and FIG. 10 are diagrams of apparatuses according to this application.

## DESCRIPTION OF EMBODIMENTS

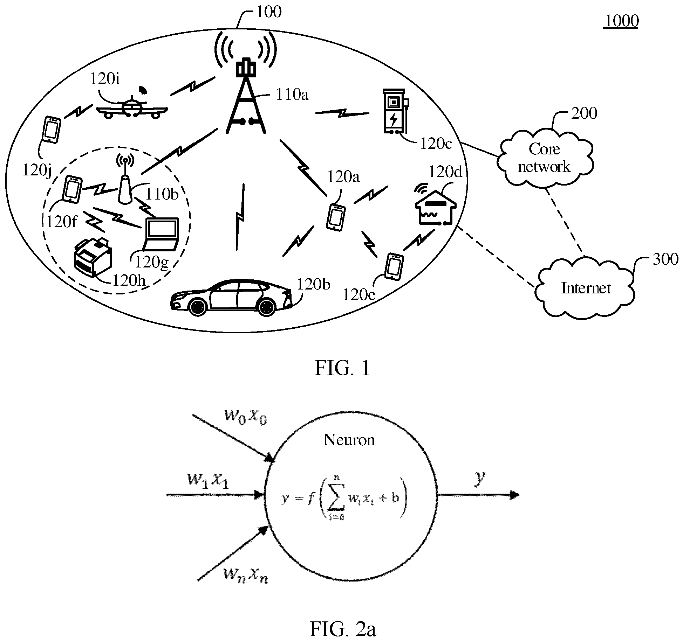

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or a part of functions of a core network device and a part of functions of the access network device may be integrated into one physical device. Terminals may be connected to each other in a wired or wireless manner, and the access network devices may be connected to each other in a wired or wireless manner. FIG. 1 is only a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, may be a central unit (central unit, CU), a distributed unit (distributed unit, DU), a central unit control plane (CU control plane, CU-CP) module, or a central unit user plane (CU user plane, CU-UP) module, that completes a part of functions of a base station. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be an access network device; or may be an apparatus, for example, a chip system, a hardware circuit, a software module, or a combination of a hardware circuit and a software module, that can support the access network device in implementing the functions, where the apparatus may be installed in the access network device or may be matched with the access network device for usage. In this application, the chip system may include a chip, or may include a chip and another discrete component. For ease of descriptions, the following describes the technical solutions provided in this application by using an example in which the apparatus configured to implement the functions of the access network device is an access network device and the access network device is a base station.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, configured to transmit data related to an AI function.

(2) Central unit (central unit, CU) and distributed unit (distributed unit, DU)

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F 1-U. A specific name of each interface is not limited in this application. The CU and the DU may be defined based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and protocol layers below the PDCP layer are set on the DU. This is not limited.

The foregoing division into processing functions of the CU and the DU based on the protocol layers is merely an example, and may alternatively be other division. For example, the CU or the DU may be defined to have functions of more protocol layers, and for another example, the CU or the DU may alternatively be defined to have a part of processing functions of the protocol layers. In a design, a part of functions of the RLC layer and functions of protocol layers above the RLC layer are set on the CU, and remaining functions of the RLC layer and functions of protocol layers below the RLC layer are set on the DU. In another design, division into functions of the CU or the DU may alternatively be performed based on a service type or another system requirement. For example, the division may be performed based on a delay. Functions whose processing time needs to satisfy a delay requirement are set on the DU, and functions whose processing time does not need to satisfy the delay requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When the PHY layer is used for sending, functions of the PHY layer may include at least one of the following functions: addition of cyclic redundancy check (cyclic redundancy check, CRC) code, channel encoding, rate matching, scrambling, modulation, layer mapping, precoding, resource mapping, physical antenna mapping, or radio frequency sending. When the PHY layer is used for receiving, functions of the PHY layer may include at least one of the following functions: CRC check, channel decoding, de-rate matching, descrambling, demodulation, layer demapping, channel detection, resource demapping, physical antenna demapping, or radio frequency receiving. The higher-layer functions of the PHY layer may include a part of the functions of the PHY layer. For example, the part of the functions are closer to the MAC layer. The lower-layer functions of the PHY layer may include the other part of the functions of the PHY layer. For example, the part of functions are closer to the radio frequency function. For example, the higher-layer functions of the PHY layer may include the addition of CRC code, the channel encoding, the rate matching, the scrambling, the modulation, and the layer mapping, and the lower-layer functions of the PHY layer may include functions of the precoding, the resource mapping, the physical antenna mapping, and the radio frequency sending. Alternatively, the higher-layer functions of the PHY layer may include the addition of CRC code, the channel encoding, the rate matching, the scrambling, the modulation, the layer mapping, and the precoding, and the lower-layer functions of the PHY layer may include functions of the resource mapping, the physical antenna mapping, and the radio frequency sending. For example, the higher-layer functions of the PHY layer may include the CRC check, the channel decoding, the de-rate matching, the decoding, the demodulation, and the layer demapping, and the lower-layer functions of the PHY layer may include functions of the channel detection, the resource demapping, the physical antenna demapping, and the radio frequency receiving. Alternatively, the higher-layer functions of the PHY layer may include the CRC check, the channel decoding, the de-rate matching, the decoding, the demodulation, the layer demapping, and the channel detection, and the lower-layer functions of the PHY layer may include functions of the resource demapping, the physical antenna demapping, and the radio frequency receiving.

For example, the functions of the CU may be implemented by one entity, or may be implemented by different entities. For example, the functions of the CU may be further divided. To be specific, a control plane and a user plane of the CU are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete functions of an access network device.

Optionally, any one of the DU, the CU, a CU-CP, a CU-UP, and the RU may be a software module, a hardware structure, or a combination of a software module and a hardware structure. This is not limited. Different entities may exist in different forms, which is not limited. For example, the DU, the CU, the CU-CP, and the CU-UP are software modules, and the RU is a hardware structure. These modules and methods performed by these modules also fall within the scope of protection of this disclosure.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. Methods performed by the modules also fall within the scope of protection of this application.

The terminal may also be referred to as a terminal device, user equipment (user equipment, UE), a mobile station, a mobile terminal, or the like. The terminal is widely applied to communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IOT), virtual reality, augmented reality, industrial control, self-driving, telemedicine, a smart grid, smart furniture, smart office, a smart wearable, smart transportation, a smart city, or the like. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

In this application, an apparatus configured to implement the functions of the terminal may be a terminal; or may be an apparatus, for example, a chip system, a hardware circuit, a software module, or a combination of a hardware circuit and a software module, that can support the terminal in implementing the functions, where the apparatus may be installed in the terminal or may be matched with the terminal for usage. For ease of descriptions, the following describes the technical solutions provided in this application by using an example in which the apparatus configured to implement the functions of the terminal is a terminal.

The base station and the terminal may be fixed or movable. The base station and/or the terminal may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on the land. Alternatively, the base station is deployed on the land, and the terminal is deployed on the water. Examples are not described one by one.

Roles of the base station and the terminal may be relative. For example, a helicopter or an uncrewed aerial vehicle 120i in FIG. 1 may be configured as a mobile base station. For a terminal 120j that accesses a radio access network 100 through 120i, a terminal 120i is a base station; while for a base station 110a, 120i is a terminal, in other words, 110a and 120i communicate with each other based on a radio air interface protocol. 110a and 120i may alternatively communicate with each other based on an interface protocol between base stations. In this case, relative to 110a, 120i is also a base station. Therefore, the base station and the terminal may be collectively referred to as communication apparatuses, 110a and 110b in FIG. 1 may be referred to as a communication apparatus having functions of a base station, and 120a to 120j in FIG. 1 may be referred to as a communication apparatus having functions of a terminal.

Communication between the base station and the terminal, between the base station and the base station, or between the terminal and the terminal may be performed using a licensed spectrum, or may be performed using an unlicensed spectrum, or may be performed using both a licensed spectrum and an unlicensed spectrum. Communication may be performed using a spectrum below 6 gigahertz (gigahertz, GHz), or may be performed using a spectrum above 6 GHz, or may be performed using both a spectrum below 6 GHz and a spectrum above 6 GHz. A spectrum resource used for wireless communication is not limited in this application.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal may establish a wireless connection to a cell controlled by the base station. The cell to which the terminal establishes the wireless connection is referred to as a serving cell of the terminal. When communicating with the serving cell, the terminal may be interfered by a signal from a neighboring cell.

In this application, an independent network element (for example, referred to as a central node, an AI network element, or an AI node) may be introduced into the communication system shown in FIG. 1 to implement an AI-related operation. The central node may be directly connected to the access network device in the communication system, or may be indirectly connected to the access network device through a third-party network element. The third-party network element may be a core network element such as an authentication management function (authentication management function, AMF) network element or a user plane function (user plane function, UPF) network element. Alternatively, an AI function, an AI module, or an AI entity may be configured in another network element in the communication system to implement an AI-related operation. For example, the another network element may be an access network device (for example, a gNB), a core network device, or network management (operation, administration and maintenance, OAM). In this case, a network element that performs the AI-related operation is a network element with a built-in AI function. In this application, the OAM is configured to operate, manage, and/or maintain a core network device, and/or is configured to operate, manage, and/or maintain an access network device.

In this application, an AI model is a specific method for implementing an AI function, and the AI model represents a mapping relationship between an input and an output of a model. The AI model may be a neural network or another machine learning model. The AI model may be referred to as a model for short. The AI-related operation may include at least one of the following: data collection, model training, model information release, model inference (model inference), inference result release, or the like.

The neural network is used as an example. The neural network is a specific implementation form of a machine learning technology. According to a universal approximation theorem, the neural network may theoretically approximate to any continuous function, so that the neural network has a capability of learning any mapping. In a conventional communication system, a communication module needs to be designed with rich expert knowledge. However, a neural network-based deep learning communication system may automatically discover an implicit pattern structure from a large quantity of data sets, establish a mapping relationship between data, and obtain performance better than that of a conventional modeling method.

An idea of the neural network is from a neuron structure of brain tissue. Each neuron performs a weighted summation operation on input values of the neuron, and outputs a result of the weighted summation through an activation function. FIG. 2a is a diagram of a structure of a neuron. It is assumed that inputs of the neuron are $x = [x_0, x_1, \ldots, x_n]$, weights corresponding to the inputs are respectively $w = [w, w_1, \ldots, w_n]$, and a bias of weighted summation is b. Forms of an activation function may be diversified. It is assumed that an activation function of one neuron is $y = f(z) = \max(0, z)$. In this case, an output of the neuron is $y = f\left(\sum_{i=0}^{i=n} w_i * x_i + b\right) = \max\left(0, \sum_{i=0}^{i=n} w_i * x_i + b\right)$. For another example, if an activation function of one neuron is $y = f(z) = z$, an output of the neuron is $y = f\left(\sum_{i=0}^{i=n} w_i * x_i + b\right) = \sum_{i=0}^{i=n} w_i * x_i + b$. b may be any possible value such as a decimal, an integer (including 0, a positive integer, a negative integer, or the like), or a complex number. Activation functions of different neurons in a neural network may be the same or different.

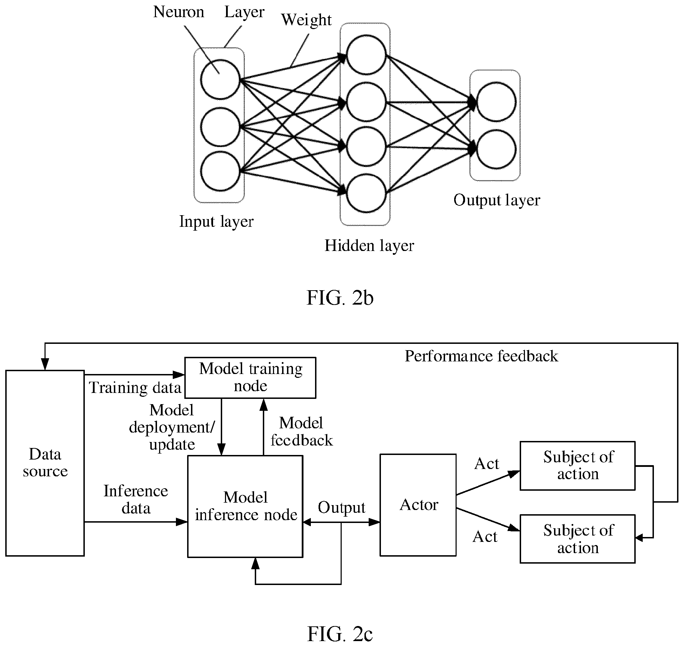

The neural network usually includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 2b is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to an intermediate hidden layer, then the hidden layer transfers a calculation result to the output layer or an adjacent hidden layer, and finally, the output layer obtains an output result of the neural network. One neural network may include one hidden layer or a plurality of hidden layers that are sequentially connected. This is not limited. In a training process of the neural network, a loss function may be defined. The loss function describes a gap or a difference between an output value of the neural network and an ideal target value. A specific form of the loss function is not limited in this application. A training process of the neural network is a process of adjusting a neural network parameter, such as a gradient, a quantity of layers, and a width of the neural network, a weight of a neuron, a parameter in an activation function of the neuron, and/or the like, so that a value of the loss function is less than a threshold value or meets a target requirement.

FIG. 2c is a diagram of an application framework of AI. A data source (data source) is configured to store training data and inference data. A model training node (model training host) analyzes or trains training data (training data) provided by the data source, to obtain an AI model, and deploys the AI model in a model inference node (model inference host). Optionally, the model training node may further update the AI model that has been deployed on the model inference node. The model inference node may further feed back related information of the deployed model to the model training node, so that the model training node optimizes or updates the deployed AI model, and so on.

The AI model represents a mapping relationship between an input and an output of the model. Obtaining the AI model through learning by the model training node is equivalent to obtaining the mapping relationship between the input and the output of the model through learning by the model training node by using training data. The model inference node uses the AI model to perform inference based on the inference data provided by the data source and obtain an inference result. The method may also be described as follows: The model inference node inputs the inference data to the AI model, and obtains an output by using the AI model. The output is the inference result. The inference result may indicate a configuration parameter used (acted) by a subject of action, and/or an operation performed by a subject of action. The inference result may be centrally planned by an actor (actor) entity, and sent to one or more subjects of action (for example, network entities) for action.

Federated Learning (federated learning, FL) is a popular AI/ML model training framework, and can effectively help a plurality organizations use data and perform machine learning modeling while meeting requirements of user privacy protection, data security, and government regulations. The federated learning, as a distributed machine learning model, can effectively solve a problem of data silos, and enable participants to perform joint modeling without sharing data, thereby technically breaking data silos and implementing AI collaboration. The federated learning includes a central node and an edge node. The central node (for example, a server or a base station) may invoke a distributed device located on an edge device (for example, a smartphone or a sensor) to participate in model training without compromising privacy.

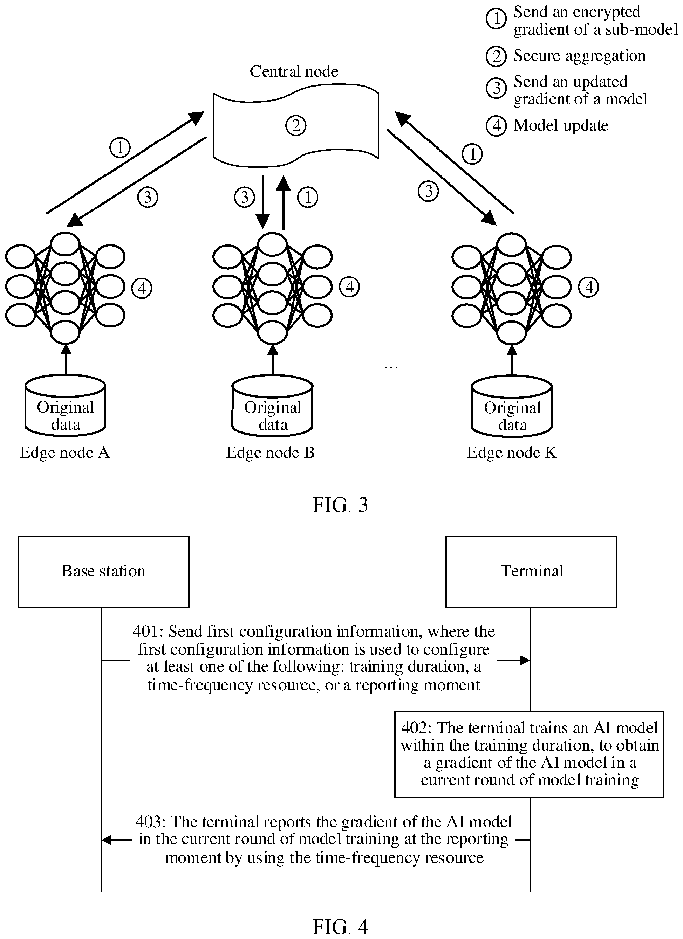

The federated learning includes the following three types: horizontal federated learning, vertical federated learning, and federated transfer learning. This application mainly relates to a process of the horizontal federated learning. FIG. 3 shows a training process of horizontal federated learning. It can be seen that the horizontal federated learning includes one central node and a plurality of edge nodes. Original data is distributed on the edge nodes, the central node does not have original data, and the edge node does not allow to send original data to the central node.

In a training process of federated learning, the central node first sends an initialized AI model (which may be referred to as an initial AI model) to each edge node, and then starts iterative training. Each iterative training process is as follows:

1. The edge node trains the initial AI model by using local data, and obtains a gradient of a trained AI model.
2. Each edge node reports, to the central node, a gradient obtained through training by the edge node.
3. After receiving gradients reported by the edge nodes, the central node aggregates the gradients, and updates a parameter of the AI model based on an aggregated gradient.
4. The central node delivers the aggregated gradient to each edge node participating in training, and the edge node updates, based on the aggregated gradient delivered by the central node, a parameter and a gradient of the AI model locally trained.
5. The central node calculates a loss function of an AI model obtained by updating the parameter; if the loss function meets a condition, ends model training; and if the loss function does not meet the condition, repeats the foregoing steps 2 to 4.

In a conventional federated learning solution, mutually orthogonal uplink time-frequency resources need to be allocated to edge nodes, and the edge nodes transmit gradients on the mutually orthogonal uplink time-frequency resources. A central node needs to sequentially restore gradients reported by all terminals participating in federated learning training, to perform gradient aggregation. This causes large overheads of time-frequency resources and a large delay, and is not applicable to a federated learning scenario with a limited bandwidth and/or a high delay requirement.

This application provides a method for training an AI model in a wireless network. In the method, a same time-frequency resource and a same reporting moment may be allocated to terminals participating in federated learning. The terminals participating in federated learning reports gradients of a trained AI model at the same reporting moment by using the same time-frequency resource, to resolve the foregoing problems of large time-frequency resource overheads and a large delay that are caused because a plurality of mutually orthogonal time-frequency resources are allocated to terminals participating in federated learning.

As shown in FIG. 4, a procedure of a method for training an AI model in a wireless network is provided. The procedure includes at least the following steps.

Step 401: Abase station sends first configuration information to a terminal participating in federated learning, where the first configuration information is used to configure at least one of the following: training duration, a time-frequency resource, or a reporting moment. Correspondingly, the terminal receives the first configuration information from the base station.

Step 402: The terminal trains an AI model within the training duration, to obtain a gradient of the AI model in a current round of model training.

Step 403: The terminal reports, to the base station, the gradient of the AI model in the current round of model training at the reporting moment by using the time-frequency resource. Correspondingly, the base station receives a signal obtained through over-the-air superposition of gradients reported by terminals.

In this application, the same training duration, the same time-frequency resource, and the same reporting moment are configured by the base station or a central node for the terminals participating in federated learning. For example, a quantity of the terminals participating in federated learning is n. In this application, the base station or the central node allocates the same time-frequency resource to the n terminals. In comparison with a conventional solution in which n orthogonal time-frequency resources are allocated to the n terminals participating in federated learning, overheads of the time-frequency resources can be reduced. In addition, if the n orthogonal time-frequency resources are allocated to the n terminals participating in federated learning, each terminal reports a gradient of the AI model by using a respective time-frequency resource. The base station may receive n radio frequency signals, and separately process the n radio frequency signals, to restore a gradient reported by each terminal. Consequently, a delay is large. However, in this application, the base station allocates one time-frequency resource to the n terminals participating in federated learning, and the n terminals report gradients on the time-frequency resource. Therefore, based on a superposition property of a wireless channel, the n gradients are superposed together during over-the-air transmission. For example, a value of n is 3, a gradient reported by a terminal 1 is Y1, a gradient reported by a terminal 2 is Y2, and a gradient reported by a terminal 3 is Y3. In this case, the foregoing three gradients are transmitted on a same time-frequency resource, and the foregoing three gradients are superposed together. It is assumed that a wireless channel meets perfect signal superposition (where fading, interference, noise, and the like may be ignored). In this case, a superposed signal is Y=Y1+Y2+Y3. When the channel does not meet the perfect signal superposition, after receiving the foregoing signal on the foregoing time-frequency resource, the base station may perform signal processing on the received signal, to restore a superposed signal Y, and the terminals may perform gradient aggregation by using the superposed signal Y A process of the gradient aggregation may be a process of calculating an arithmetic average. For example, the superposed signal Y may be divided by 3, and a result is used as an aggregation gradient. According to the solution of this application, the superposed signal Y may be obtained by processing one radio frequency signal. However, in an existing solution, three radio frequency signals in different slots need to be sequentially processed to restore corresponding gradients, and then aggregation is further performed. By using the solution of this application, usage of time-frequency resources can be reduced to some extent, and a delay of the gradient aggregation can be reduced.

The training duration configured by the base station (or another device in an access network device) for the terminal may not be actual training duration of the terminal, but is usually an upper limit of time required by the terminal for each round of training. In other words, the terminal completes the current round of model training within the training duration, and reports a training completion indication to the base station. Otherwise, the terminal may end the current round of model training, and wait for next training duration to arrive. In this application, the base station sets the training duration to ensure that the different terminals can simultaneously report the gradients of the model training to the base station. Optionally, it may be better ensured that the gradient that is of the model training and that is reported by the terminal to the base station is a gradient in the current round of model training, instead of a gradient in another round of model training, for example, a gradient in a previous round of model training. For example, the training duration may be a global parameter determined by comprehensively considering computing capabilities of the terminals participating in federated learning, complexity of the model, and the like, and then configured by the base station for each terminal.

In this application, the quantity of the terminals participating in federated learning may be n, each terminal may be considered as an edge node,

and the central node may be a base station, or may be OAM, or may be independently located as a module in a core network, or the like. This is not limited. In subsequent descriptions, an example in which the central node is independent of the base station, in other words, the central node and the base station are two devices is used for descriptions.

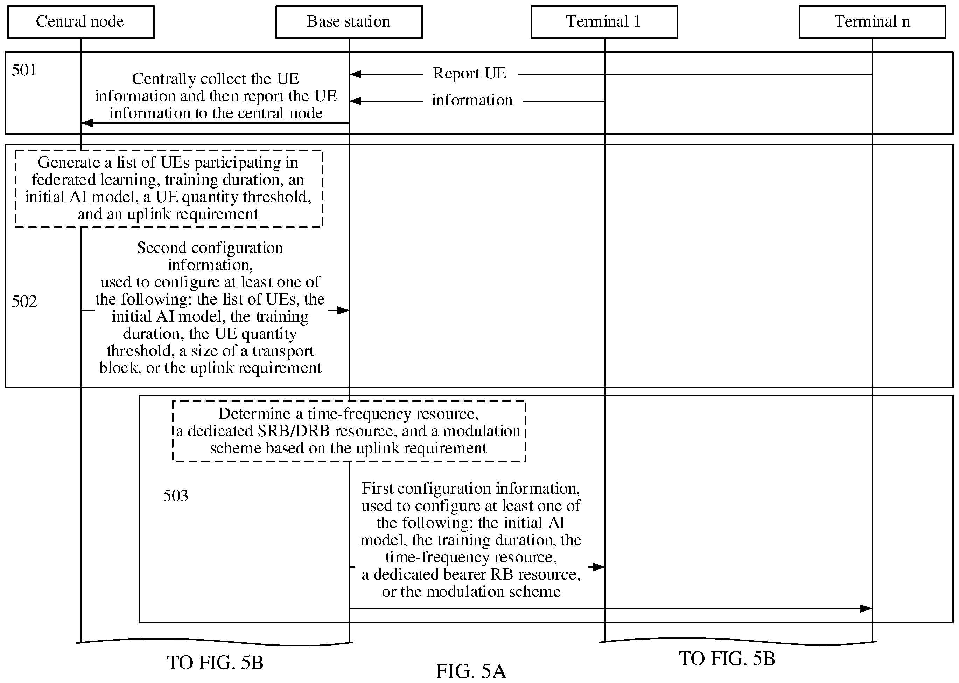

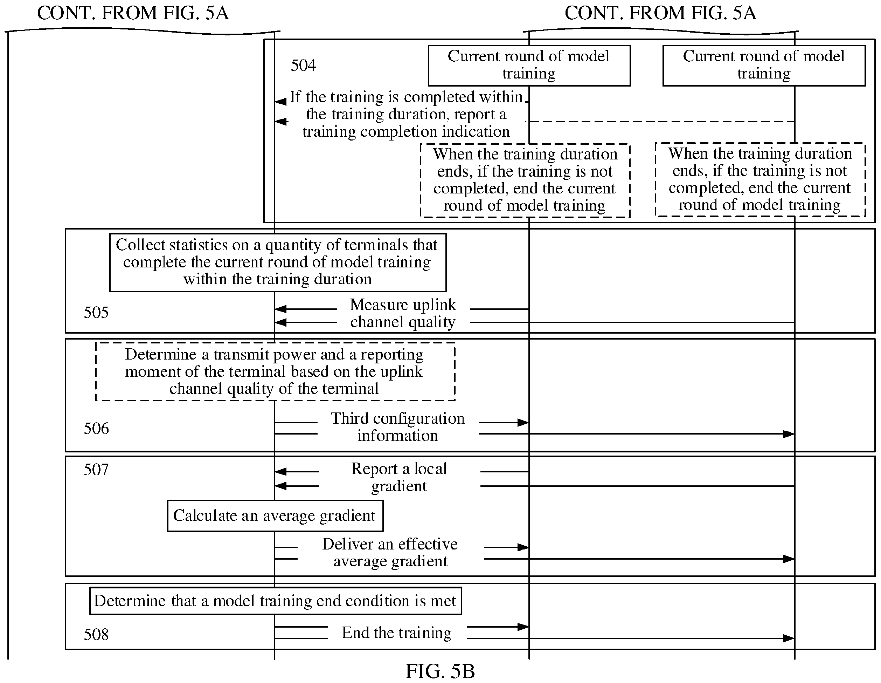

As shown in FIG. 5A and FIG. 5B, a procedure of a method for training an AI model in a wireless network is provided. The procedure includes at least the following steps.

Step 501: Each of n terminals reports terminal information to a base station, and the base station centrally collects the terminal information, and reports the collected terminal information to a central node. In this application, the terminal information includes at least one of the following:

1. Communication capability of the terminal, which includes, for example, a maximum transmit power that can be supported by the terminal and an antenna configuration of the terminal.

2. Computing capability of the terminal, which includes, for example, performance of a central processing unit (central processing unit, CPU), performance of a graphics processing unit (graphics processing unit, GPU), storage space, and a quantity of electricity.

3. Data set feature of the terminal, which is, for example, a size of a data set, distribution of the data set, whether the data set is completed, and whether a label of the data set is completed. Optionally, the data set may be further divided into a training set, a validation set, and a test set based on a percentage. For example, 60% of the data set is the training set, 20% of the data set is the validation set, and 20% of the data set is the test set. It may be understood that the training set is used to train an AI model, the validation set is used to evaluate the trained AI model, and the test set is used to test the trained AI model.

Optionally, the base station allocates a terminal temporary identifier to the terminal. The identifier may be a cell radio network temporary identifier (cell radio network temporary identifier, C-RNTI), another temporary identifier, or the like. Optionally, other temporary identifiers may be distinguished using a coding manner, for example, using sequence numbers shown in Table 1 or Table 2.

**Table 1**

| Terminal | Terminal 1 | Terminal 2 | Terminal n |
|---|---|---|---|
| Terminal temporary identifier | 1 | 2 | n |

**Table 2**

| Terminal | Terminal 1 | Terminal 2 | Terminal n |
|---|---|---|---|
| Terminal temporary identifier | 000001 | 000010 | 111111 |

Optionally, before step 501, the procedure may further include: The base station sends, to the n terminals, an indication for reporting the terminal information. The n terminals separately report the respective terminal information in the foregoing step 501 based on the indication.

Step 502: The central node sends second configuration information to the base station. Optionally, the second configuration information is used to configure at least one of the following: a list of terminals participating in federated learning, an initial AI model, training duration, a terminal quantity threshold, a size of a transport block, an uplink requirement, or the like. The uplink requirement may include a rate, a bit error rate, a delay, or the like during uplink transmission of the terminal. The transport block is a data block including a MAC protocol data unit (protocol data unit, PDU), and the data block is transmitted in a transmission time interval (transmission time interval, TTI).

It should be noted that, in this application, when the base station receives the terminal information reported by the terminal, the terminal information may be referred to as first terminal information. The base station allocates a temporary identifier to the terminal, and adds the temporary identifier to the terminal information, to form second terminal information. In addition to the terminal temporary identifier, the second terminal information may further include at least one of the following: the communication capability of the terminal, the computing capability of the terminal, or the data set feature of the terminal. The base station reports the second terminal information to the central node.

Specifically, the central node may determine, based on the second terminal information reported by the base station, the list of terminals participating in federated learning. For example, the second terminal information includes the communication capability, the computing capability, the data set feature, the temporary identifier, and the like of the terminal. For example, the central node comprehensively considers the communication capability, the computing capability, the data set feature, and the like of the terminal, and generates the list of terminals participating in federated learning. For example, during comprehensive consideration, priorities may be set for the communication capability, the computing capability, the data set feature, and the like of the terminal. A priority of the data set feature of the terminal is higher than a priority of the communication capability of the terminal, and the priority of the communication capability of the terminal is higher than a priority of the computing capability of the terminal. Further, corresponding thresholds are respectively set for the communication capability, the computing capability, and the data set feature of the terminal, and a terminal that does not meet a threshold condition is not considered to be put into the list of terminals participating in federated learning. For example, the central node may use, as the terminal participating in federated learning, a terminal whose communication capability is greater than or equal to a communication capability threshold, whose computing capability is greater than or equal to a computing capability threshold, and whose data set feature meets a data set feature requirement.

In this application, the central node may configure the training duration for the terminal participating in federated learning. The training duration needs to be configured in consideration of calculation complexity of the to-be-trained AI model and computing capabilities of the terminals, to ensure that all the terminals participating in federated learning can complete local model training within the training duration. However, the training duration should not be set excessively long, to avoid affecting overall efficiency of training of the AI model.

In this application, the central node may determine the terminal quantity threshold. When over-the-air computation is introduced into the federated learning, a quantity of the terminals participating in federated learning affects accuracy of calculating an average gradient in a current round of model training. Therefore, the central node may set the terminal quantity threshold. When a quantity of terminals that report gradients is greater than or equal to the terminal quantity threshold, the average gradient in the current round of model training is calculated and sent to the terminal; or otherwise, an average gradient in a previous round of model training is sent to the terminal, or an average gradient in a previous round of model training may be used as the average gradient in the current round of model training and sent to the terminal.

Step 503: The base station sends first configuration information to the terminal.

In this application, the first configuration information is used to configure at least one of the following: the training duration, a reporting moment, a time-frequency resource, a dedicated bearer radio bearer (radio bearer, RB) resource, a modulation scheme, the initial AI model, or the like.

For example, the base station may determine the time-frequency resource, the dedicated bearer RB resource, the modulation scheme, and the like based on the uplink requirement. In this application, a same time-frequency resource, a same reporting moment, and same training duration are allocated by the base station to the n terminals participating in federated learning.

For example, the base station needs to allocate the dedicated bearer RB resource to the terminal. The dedicated bearer RB resource may be a signaling radio bearer (signal radio bearer, SRB) resource, a data radio bearer (data radio bearer, DRB) resource, or the like, and is used to transmit a gradient of the AI model. The dedicated bearer RB resource may be used only for transmission of a gradient, and cannot be used for transmission of other data. The modulation scheme configured by the base station for the terminal may be phase shift keying (phase shift keying, PSK), quadrature amplitude modulation (quadrature amplitude modulation, QAM), another modulation scheme, or the like. A specific order of the PSK or the QAM to be used for modulation may be determined based on the uplink requirement, uplink channel quality, a communication capability of the base station, the communication capability of the terminal, and the like.

Step 504: The terminal trains the AI model within the training duration.

In this application, when receiving the first configuration information, the terminal may train the AI model. It may be understood that, in a first-round training process, the terminal specifically trains the initial AI model, and the initial AI model is configured by the central node for the terminal. In a subsequent training process, the terminal specifically trains an AI model obtained through previous training. The training duration in this application may be represented by T. For the terminal participating in federated learning, if the training of the AI model is completed within the training duration T, a training completion indication is reported to the base station. If the training of the AI model is not completed within the training duration T, the model training is ended.

Step 505: The base station collects, based on the training completion indication reported by the terminal, statistics on a quantity of terminals that complete the training of the AI model within the training duration T, and measures uplink channel quality of the terminal that completes the current round of model training. Optionally, for a terminal that does not complete the model training in the current round of model training, the base station no longer measures uplink channel quality of the corresponding terminal. Correspondingly, the terminal that does not complete the model training no longer reports a gradient of the AI model in the current round of model training to the base station.

For example, the base station may set a counter. When each round of training starts, the base station counts terminals that report the training completion indication, and resets the counter to 0 when each round of training ends. When the training duration T ends, if the count of the counter is greater than or equal to the terminal quantity threshold, the base station measures uplink channel quality of the terminals; or otherwise, the base station triggers the terminals to perform a next round of training.

Optionally, for one terminal, a process in which the base station measures uplink channel quality of the terminal includes: The base station receives a sounding reference signal (sounding reference signal, SRS) from the terminal. The base station measures the SRS, to determine the uplink channel quality of the terminal.

Step 506: The base station determines a transmit power of the corresponding terminal based on the uplink channel quality of the terminal; and the base station sends third configuration information to the terminal, where the third configuration information is used to configure the transmit power, the reporting moment, and the like of the terminal. In this application, the third configuration information and the first configuration information may be collectively referred to as one piece of configuration information.

For example, the base station may determine the transmit power of the terminal by comprehensively considering conditions such as an error requirement of over-the-air computation, the uplink channel quality of the terminal, a maximum transmit power supported by the terminal, and a total power. Because the over-the-air computation has a requirement on synchronization of nodes, an excessively large synchronization error affects accuracy of the over-the-air computation. Therefore, the base station may configure the same reporting moment for the n terminals participating in federated learning. In addition, a channel is always changing, and therefore, there is a validity period for channel quality measurement. Therefore, the terminals need to simultaneously report gradients of the AI model in the current round of model training at the reporting moment, and the reporting moment should be within the validity period for the channel quality measurement.

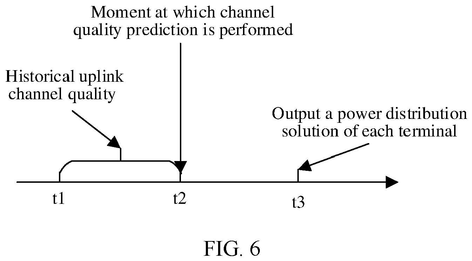

Optionally, in consideration of time overheads for determining the transmit power of the terminal by the base station, the validity period of a channel quality measurement result may be exceeded, thereby causing mismatch between power allocation and uplink channel quality, and so on. In a design, the base station may predict uplink channel quality at the current reporting moment based on historical uplink channel quality of the terminal, and optimize an optimal transmit power in advance. A specific prediction manner is shown in FIG. 6. The base station collects historical uplink channel state quality of each terminal between a moment $t_1$ and a moment $t_2$, starts to predict uplink channel quality of the terminal at a moment $t_3$ based on the historical uplink channel quality of the terminal at the moment $t_2$, determines an optimal power distribution solution of the terminal at the moment $t_3$, and delivers the optimal power distribution solution to the terminal at the moment $t_3$. After receiving the power distribution solution, the terminal immediately reports a gradient in the current round of model training.

Step 507: The terminal reports the gradient in the current round of model training, the base station calculates the average gradient in the current round of model training, and the base station updates a parameter of the AI model based on the average gradient in the current round of model training, and delivers the average gradient in the current round of model training to the n terminals participating in federated learning.

For example, if the n terminals participating in federated learning complete the model training within the training duration T at the reporting moment,
the terminals may report the gradients in the current round of model training to the base station. When receiving the gradients that are in the current round of model training and that are reported by the n terminals, the base station may calculate the average gradient in the current round of model training based on the gradients reported by the terminals. For example, because the n terminals report the gradients in the current round of model training on the same time-frequency resource, a signal received by the base station is a signal obtained through over-the-air superposition of the n gradients. For example, if a gradient obtained through superposition of the n gradients is Y, the base station may determine that the average gradient in the current round of model training is equal to Y/n. Optionally, in this application, the terminal that does not complete the model training within the training duration T no longer reports the gradient in the current round of model training to the base station.

In this application, each terminal should start to report a gradient in the current round of model training as soon as possible when the reporting moment arrives, to reduce a reporting time error of the terminals as much as possible. The base station needs to process the received signal obtained through the over-the-air computation, to restore the average gradient in the current round of model training. For example, if the count of the counter in the base station is greater than or equal to the terminal quantity threshold, the base station delivers the locally calculated average gradient in the current round of model training to each terminal. Otherwise, the average gradient in the previous round of model training is used as the average gradient in the current round of model training, and is delivered to each terminal.

Optionally, if terminals participating in federated learning are changed, the base station may send an updated model parameter to the terminal.

It may be understood that step 504 to step 507 are a cyclic process. After the average gradient in the current round of model training is delivered in step 507, the terminal may update the parameter and the gradient of the AI model based on the average gradient in the current round of model training, and report the training completion indication to the base station if the model training is completed within the training duration T. It should be noted that, in machine learning, to reduce a loss function, parameters of the AI model need to descend along a negative direction of the gradients, that is, the gradients descend. In this application, the parameter of the AI model may be first updated in the current round of model training based on the average gradient in the previous round of model training, and then the gradient of the AI model is updated based on an updated parameter, that is, the gradient is updated.

Step 508: The base station determines a model training end condition, and sends a model training end indication to the terminal.

For example, the base station may determine the model training end condition, and send the model training end indication to each terminal. The model training end condition may be at least one of the following: A model parameter converges; a maximum quantity of times of model training is reached; maximum time for model training is reached; or the like.

In this application, the over-the-air computation is introduced, to reduce a communication delay, overheads of the time-frequency resources, and signaling overheads in a federated learning process. The configured training duration and the configured reporting moment can reduce a time synchronization error of reporting the gradients by the terminals. Before the gradient is reported, the base station first measures the uplink channel quality of all the participating terminals, and optimizes a transmit power of each terminal, to improve performance of the over-the-air computation and further improve training effect of the federated learning.

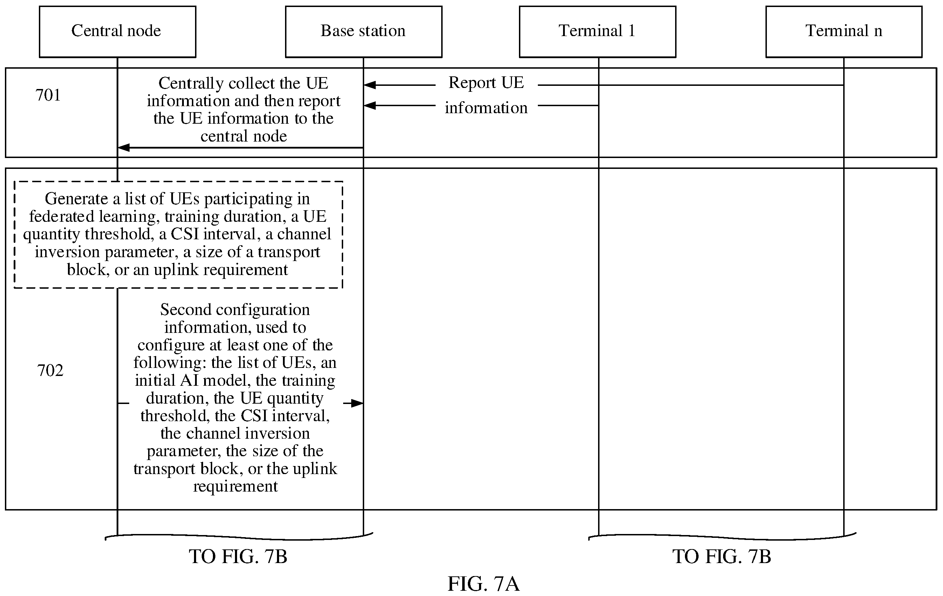

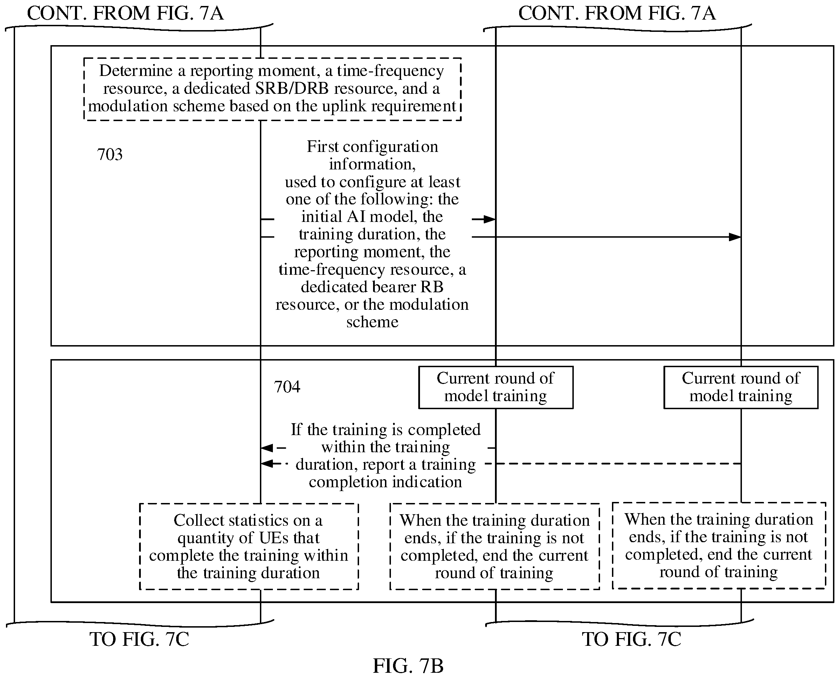

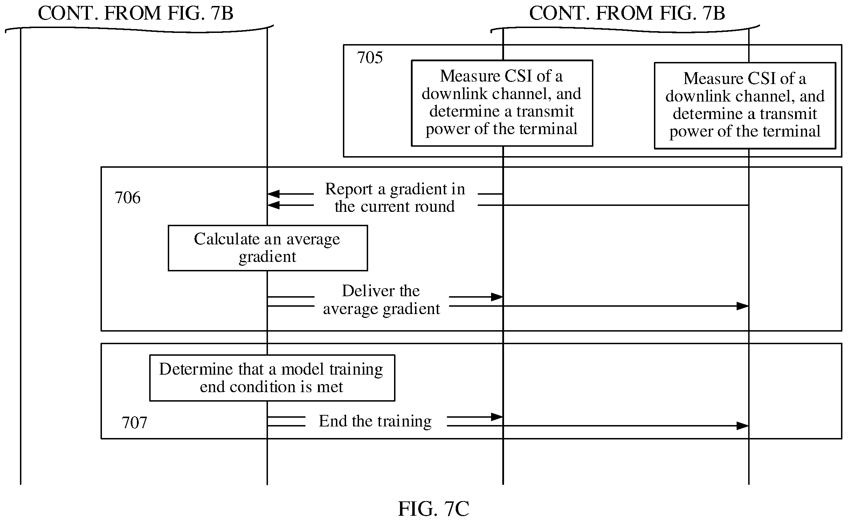

As shown in FIG. 7A to FIG. 7C, this application provides a procedure of a method for training an AI model in a wireless network. A main difference between the procedure and the procedure shown in FIG. 5A and FIG. 5B lies in that, in the procedure, a terminal determines, by itself, a transmit power of reporting a gradient in a current round of model training, and the transmit power is no longer configured by a base station. The procedure includes at least the following steps.

Step 701: n terminals report terminal information to a base station, and the base station centrally reports the terminal information to a central node.

Specifically, when receiving the terminal information of the terminals, the terminal may allocate a temporary identifier to the terminal, add the temporary identifier to the terminal information, and report terminal information to the central node. Refer to the descriptions in FIG. 5A and FIG. 5B.

Step 702: The central node sends second configuration information to the base station, where the second configuration information is used to configure at least one of the following: a list of terminals participating in federated learning, an initial AI model, training duration, a terminal quantity threshold, a channel state information (channel state information, CSI) interval, a channel inversion parameter, a size of a transport block, or an uplink requirement. For the list of terminals in the federated learning, the initial AI model, the training duration, the terminal quantity threshold, the size of the transport block, the uplink requirement, and the like, refer to the descriptions in FIG. 5A and FIG. 5B. This procedure focuses on the CSI interval and the channel inversion parameter.

In this application, CSI is channel state information, and includes a signal-to-noise ratio, a Doppler frequency shift, a multipath delay spread, and the like. The CSI interval includes a signal-to-noise ratio interval, a maximum Doppler frequency shift interval, and a maximum delay spread interval. The signal-to-noise ratio interval is $[\gamma_{min}, \gamma_{max}]$, where $\gamma_{min}$ and $\gamma_{max}$ are respectively a lower limit and an upper limit of the signal-to-noise ratio. The maximum Doppler frequency shift interval is $[f_{min}, f_{max}]$, where $f_{min}$ and $f_{max}$ are respectively a lower limit and an upper limit of the maximum Doppler frequency shift. The maximum delay spread interval is $[\tau_{min}, \tau_{max}]$, where $\tau_{min}$ and $\tau_{max}$ are respectively a lower limit and an upper limit of the maximum delay spread.

In this application, the gradient in the current round of model training may be reported to the base station only when downlink CSI of the terminal meets the CSI interval. Otherwise, the gradient is not reported. For example, the signal-to-noise ratio, the maximum Doppler frequency shift, and the maximum delay spread that are measured by the terminal are respectively $\gamma_1$, $f_1$, and $\tau_1$. If $\gamma_{min} \leq \gamma_1 \leq \gamma_{max}$, $f_{min} \leq f_1 \leq f_{max}$, and $\tau_{min} \leq \tau_1 \leq \tau_{max}$, the terminal may report the gradient in the current round of model training to the base station at a reporting moment. Otherwise, the terminal does not report the gradient in the current round of model training.

In this application, the channel inversion parameter $\alpha$ is a parameter used for power control. It is assumed that a maximum power and a channel gain of a $k^{th}$ terminal are respectively $P_k$ and $h_k$, and $P_1|h_1|^2 \leq \cdots \leq P_k|h_k|^2 \leq ... \leq p_K|h_K|^2$. In this case, $\alpha = P_1|h_1|^2$, and a transmit power used by the $k^{th}$ terminal to report a gradient should be: $p_k = \dfrac{\alpha}{|h_k|^2}$.

Step 703: The base station determines a time-frequency resource, a dedicated bearer RB resource, a scheduling scheme, and the like based on the uplink requirement. The base station sends first configuration information to the terminal, where the first configuration information is used to configure at least one of the following: the training duration, the reporting moment, the time-frequency resource, the initial AI model, the dedicated bearer RB resource, a modulation scheme, or the like.

In this application, the dedicated bearer RB resource includes a dedicated SRB resource, a dedicated DRB resource, and/or the like. The base station may determine the time-frequency resource, the SRB/DRB resource, the modulation scheme, or the like based on the uplink requirement. To meet a requirement of over-the-air computation, all the terminals need to use the same time-frequency resource. Optionally, the base station may allocate same time-frequency resources to the n terminals, and improve performance of the over-the-air computation by using time diversity or frequency diversity. It should be noted that, when the base station configures the same time-frequency resources for the n terminals, the n terminals report gradients in the current round of model training to the base station at the specific reporting moment by using the time-frequency resources. For example, if the base station configures three time-frequency resources for the n terminals, the n terminals report the gradients in the current round of model training at the reporting moment by simultaneously using a first time-frequency resource, a second time-frequency resource, and a third time-frequency resource that are in the three time-frequency resources. That is, at the reporting moment, when the n terminals report the gradients in the current round of model training, the same time-frequency resources are specifically used. To avoid interference from other data, the base station may allocate an independent SRB/DRB resource to the terminal to transmit the gradient in the current round of model training. The base station may configure the modulation scheme such as PSK or QAM for the terminal. A specific order of the PSK or the QAM to be used for modulation may be determined based on at least one of the following: the uplink requirement, uplink channel quality, a communication capability of the base station, a communication capability of the terminal, or the like.

Step 704: The terminal locally trains a model.

In this application, the terminal may start to perform model training when receiving the first configuration information. If the terminal completes the model training within the training duration T, the terminal reports a training completion indication to the base station. If the terminal does not complete the model training within the training duration T, the terminal ends the model training.

Step 705: The terminal measures CSI of a downlink channel, and determines a transmit power of the terminal.

In this application, a same frequency resource may be configured for an uplink channel and the downlink channel of the terminal. Based on channel reciprocity, the terminal may measure the CSI of the downlink channel, to obtain CSI of the uplink channel. The terminal may determine whether the obtained CSI of the uplink channel is in the CSI interval. If the obtained CSI of the uplink channel is within the CSI interval, the transmit power is determined based on the channel inversion parameter. It can be learned from the foregoing descriptions that, the channel inversion parameter: $\alpha = P_1|h_1|^2$, and the transmit power used by the $k^{th}$ terminal to report the gradient should be: $p_k = \dfrac{\alpha}{|h_k|^2}$. In this application, for the $k^{th}$ terminal, a parameter $h_k$ may be obtained using the CSI, and the transmit power $p_k$ of the $k^{th}$ terminal may be determined with reference to the channel inversion parameter $\alpha$, where k is a positive integer greater than or equal to 1 and less than or equal to n.

Step 706: The terminal reports the gradient in the current round of model training, and the base station calculates an average gradient in the current round of model training, updates the parameter of the AI model based on the average gradient in the current round of model training, and sends the average gradient in the current round of model training to each terminal participating in federated learning. For a specific process of step 706, refer to the foregoing step 507.

Step 707: The base station determines a model end condition, and sends a model training end indication to each terminal.

It should be noted that, in a design, the terminals may use the configured training duration and the configured reporting moment, to ensure that the terminals simultaneously report the gradients in the local training. For example, it may be configured that, after receiving an average gradient that is in a previous round of model training and that is delivered by the base station, the terminal starts to perform the current round of model training, and reports a local training gradient in the current round of model training at a $T^{th}$ second after receiving the average gradient in the previous round of model training. The $T^{th}$ second is a training cycle, and the $T^{th}$ second after the average gradient in the previous round of model training is received is the reporting moment.

In this application, the over-the-air computation is introduced, to reduce a communication delay and bandwidth overheads in a federated learning process, and the configured training duration and the configured reporting moment can reduce a time error of reporting the gradients by the terminals. The base station sends, in a preconfiguration manner, parameters such as the training duration, a power adjustment solution, and the reporting moment to each terminal participating in federated learning, and the terminal periodically trains the model and reports a gradient. Before reporting the gradient, the terminal optimizes the transmit power of the terminal through measurement of downlink channel quality by using the channel reciprocity, thereby improving performance of the over-the-air computation and further improving training effect of the federated learning. In addition, the terminal actively reports a training gradient when the training duration ends, so that signaling overheads of the base station for scheduling the terminal can be reduced.

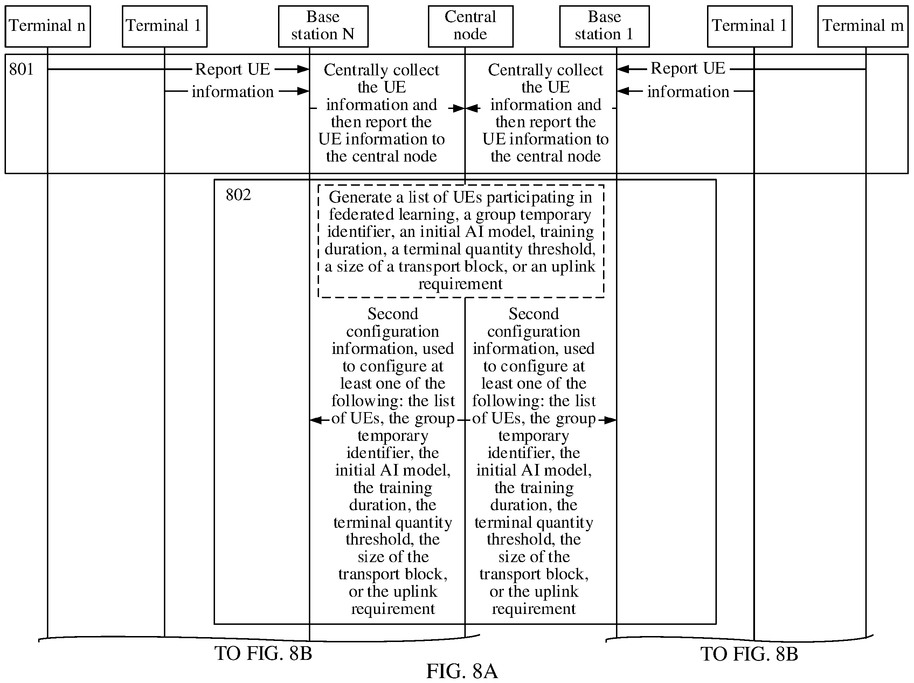

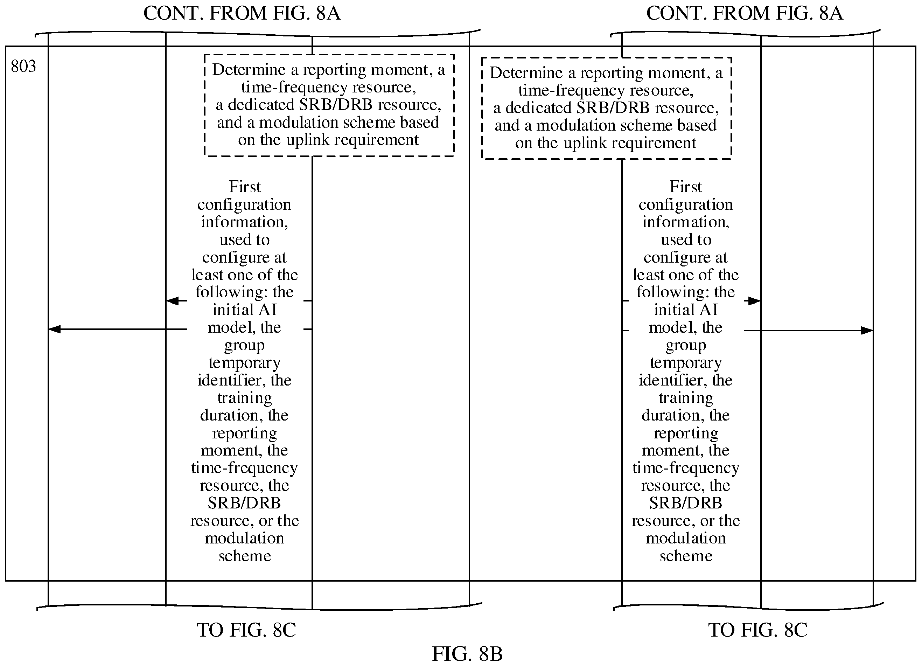

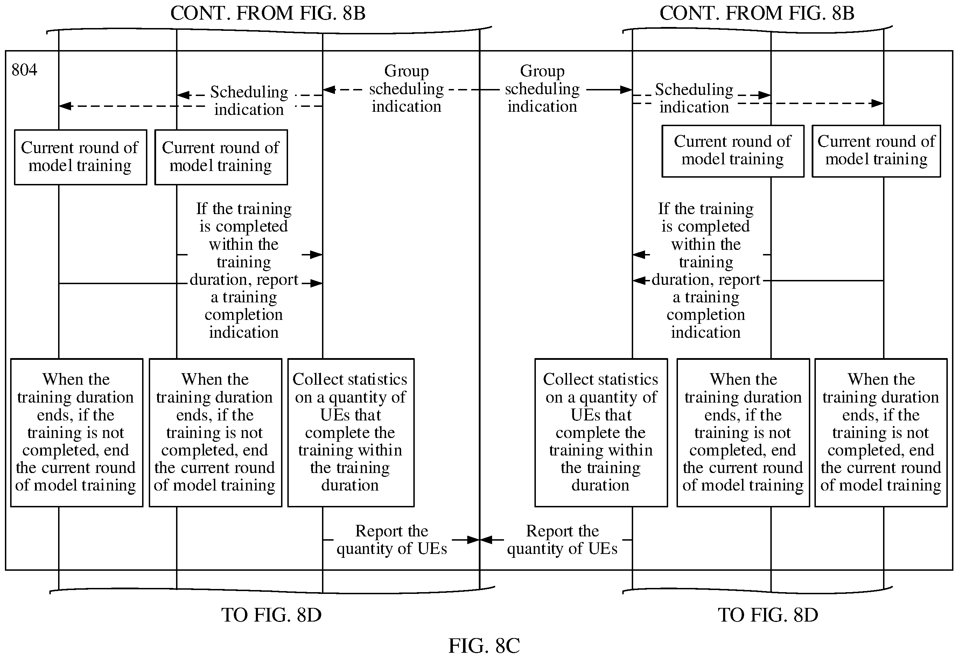

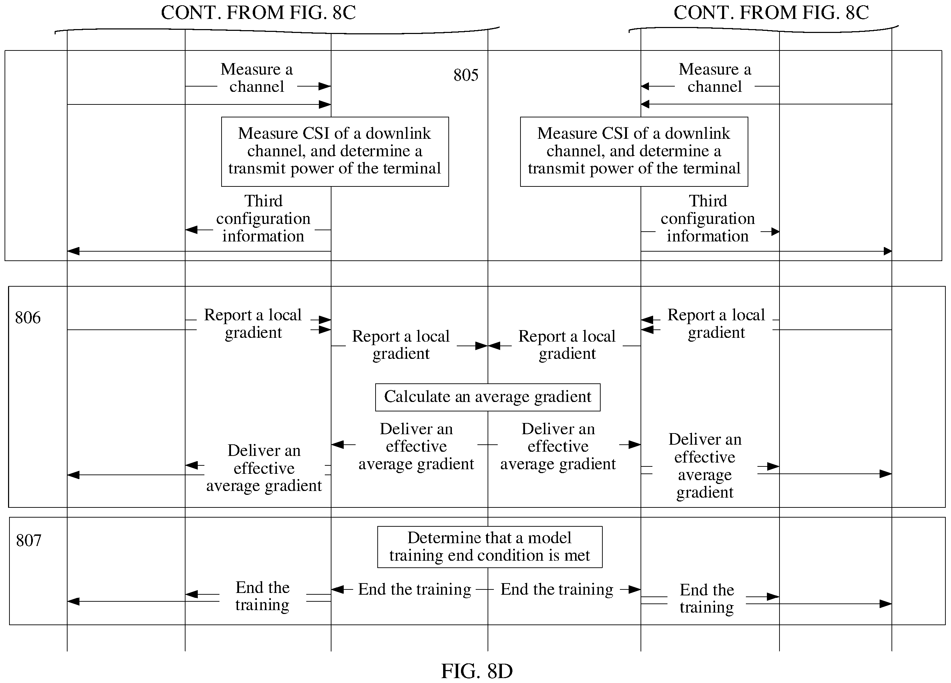

As shown in FIG. 8A to FIG. 8D, a flowchart of a method for training an AI model in a wireless network is provided. A main difference between the flowchart and the procedure shown in FIG. 5A and FIG. 5B lies in that terminals participating in federated learning are grouped, and then a central node schedules a terminal in a specific group to centrally report gradients in a current round of model training. The flowchart includes at least the following steps.

Step 801: Terminals report terminal information to a base station, and the base station centrally reports the terminal information to a central node.

For specific descriptions, refer to the descriptions in FIG. 5A and FIG. 5B.

Step 802: The central node sends second configuration information to the base station.

In this application, the central node may determine a list of terminals participating in federated learning, an initial AI model, training duration, a terminal quantity threshold, a size of a transport block, an uplink requirement, a group temporary identifier, or the like. The second configuration information is used to configure at least one of the following: the list of terminals participating in federated learning, the initial AI model, the training duration, the terminal quantity threshold, the size of the transport block, the uplink requirement, the group temporary identifier, or the like.

In this application, the central node may comprehensively consider a communication capability of the terminal, a computing capability of the terminal, a data set feature, and the like, determine the list of terminals participating in federated learning within a service range of each base station, group, into one group, terminals that participate in the federated learning and that are within the service range of the base station, and allocate a temporary identifier to the group. The identifier may be referred to as a group temporary identifier. For example, during comprehensive consideration, the central node may set priorities for the communication capability, the computing capability, the data set feature, and the like of the terminal, where a priority of the data set feature is higher than a priority of the communication capability of the terminal, and the priority of the communication capability of the terminal is higher than a priority of the computing capability of the terminal. Further, corresponding thresholds are respectively set for the communication capability, the computing capability, the data set feature, and the like of the terminal, and a terminal that does not meet a threshold condition is not considered to be put into the list of terminals participating in federated learning. In this application, terminals that participate in the federated learning and that are within a coverage area of one base station may be grouped into one group. For example, in the procedure in FIG. 8A to FIG. 8D, an example in which m terminals within a coverage area of a base station 1 are grouped into one group, and n terminals within a coverage area of a base station N are grouped into another group is used. Both m and n are positive integers, and values of m and n may be the same or different. For each group, the terminal may allocate a temporary identifier, referred to as a group temporary identifier, to the group. In a possible implementation, two groups are used as an example. For a list of terminals participating in federated learning in each group, refer to the following Table 3.

**Table 3**

| Group temporary identifier | B1 | | | B2 | | |
|---|---|---|---|---|---|---|
| Terminal temporary identifier | U1 | U2 | U3 | U4 | U5 | U6 |

Step 803: The base station sends first configuration information to the terminal, where the first configuration information is used to configure at least one of the following: the initial AI model, the group temporary identifier, the training duration, a time-frequency resource, a dedicated bearer RB resource, a modulation scheme, or the like.

In this application, the base station may determine the time-frequency resource, the dedicated bearer RB resource, the modulation scheme, and the like based on the uplink requirement in the first configuration information. Alternatively, the time-frequency resource may be configured by the central node, and delivered to each terminal through the base station. The central node may allocate a same time-frequency resource to all terminals in a same group.

Step 804: The central node sends a scheduling indication to the base station, and the base station forwards the scheduling indication to the terminal, where the scheduling indication includes a group temporary identifier, and the scheduling indication is used to schedule a terminal corresponding to the group temporary identifier, to perform training of an AI model in the current round of model training.

In this application, an example in which n terminals within a coverage area of one base station are grouped into one group is used. If the central node specifically schedules a specific group to perform model training and report gradients in the current round of model training, the central node sends a scheduling indication to a base station corresponding to the group. When receiving the scheduling indication, the base station may broadcast the scheduling indication in a coverage area of the base station. When receiving the scheduling indication, a terminal may compare, with a group temporary identifier allocated by the central node to the terminal, a group temporary identifier carried in the scheduling indication. If the two are the same, the terminal performs the training of the AI model in the current round of model training; or otherwise, the terminal does not perform the training of the AI model in the current round of model training.

Similar to the procedure shown in FIG. 5A and FIG. 5B, when the training duration ends, if the terminal completes the training of the AI model, the terminal reports a training completion indication to the base station; and when the training duration ends, if the terminal does not complete the training of the AI model, the terminal also ends the training of the AI model. The base station counts, based on the training completion indication reported by the terminal, a quantity of terminals that complete the model training within the training duration, and reports the quantity of terminals to the central node.

Step 805: The base station sends third configuration information to the terminal, where the third configuration information is used to configure a transmit power and a reporting moment of each terminal. Optionally, the base station configures the same reporting moment for the terminals. Alternatively, the reporting moment may be configured by the central node and forwarded by the base station to each terminal, in other words, the second configuration information may be further used to configure the reporting moment. In this application, the third configuration information and the first configuration information may be referred to as one piece of configuration information.

For example, a process of determining the transmit power by the base station includes: The base station measures an SRS from the terminal, to determine uplink channel quality of the terminal. The terminal determines the transmit power of the terminal based on the uplink channel quality. For details, refer to the descriptions in FIG. 5A and FIG. 5B. Details are not described herein again.

Step 806: The terminal reports a gradient in the current round of model training to the central node, and the central node calculates an average gradient in the current round of model training, updates a parameter of the AI model based on the average gradient in the current round of model training, and delivers the average gradient in the current round of model training to terminals in a current scheduling group through the base station.

Specifically, the central node may compare a value relationship between a quantity of terminals that complete the training of the AI model within the training duration and the terminal quantity threshold. When the quantity of terminals that complete the training of the AI model within the training duration is greater than the terminal quantity threshold, the central node calculates the average gradient in the current round of model training based on gradients that are in the current round of model training and that are reported by the terminals; or otherwise, the central node uses an average gradient in a previous round of model training as the average gradient in the current round of model training. The central node updates the parameter of the AI model based on the average gradient in the current round of model training, and sends the average gradient in the current round of model training to the terminals in the foregoing scheduling group through the base station.

Step 807: The central node determines a model training end condition, and sends a model training end indication to a corresponding terminal.

For the model training end condition, refer to the descriptions of the procedure in FIG. 5A and FIG. 5B or FIG. 7A to FIG. 7C. A difference lies in that, in the procedure in FIG. 8A to FIG. 8D, the central node determines whether the model training end condition is met, and in the procedure shown in FIG. 5A and FIG. 5B or FIG. 7A to FIG. 7C, the base station determines whether the model training end condition is met. It may be understood that the central node may first send the model training end indication to the base station, and the base station forwards the model training end indication to the terminal.

In the procedure shown in FIG. 8A to FIG. 8D, the central node may schedule terminals in all groups to participate federated learning training, or may schedule only terminals in a part of groups to participate in the federated learning training. In the foregoing descriptions, when receiving the scheduling indication, the terminal may perform the federated learning training; or otherwise, the terminal does not perform the federated learning training. Optionally, the terminal may further configure a monitoring parameter of the terminal, where the parameter includes a monitoring moment and monitoring duration. When the monitoring moment arrives, a scheduling indication is monitored based on the configured monitoring duration. When the monitoring duration is reached, the terminal stays in a sleep mode, thereby saving power of the terminal.

In the foregoing solution, terminals are grouped, and only a part of terminals may be scheduled to perform the federated learning training. In comparison with a solution in which all terminals need to participate in the federated learning, power consumption of the terminals can be reduced.

It may be understood that, to implement the functions in the foregoing methods, the base station, the terminal, and the central node include corresponding hardware structures and/or software modules for performing the functions. A person skilled in the art should be easily aware that, with reference to units and method steps in the examples described in this application, this application can be implemented by hardware or a combination of hardware and computer software. Whether a function is performed by hardware or hardware driven by computer software depends on particular application scenarios and design constraints of the technical solutions.

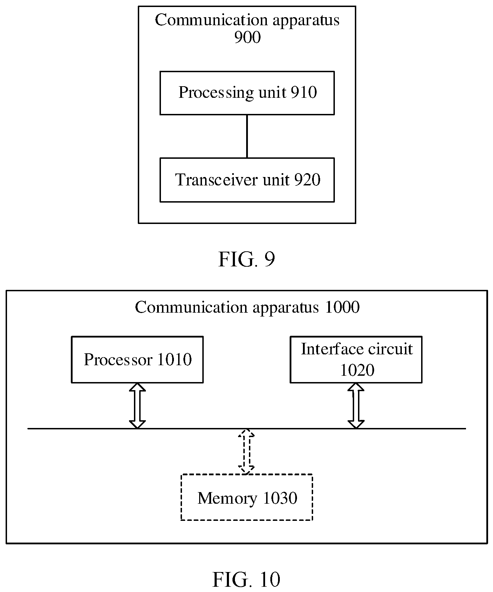

FIG. 9 and FIG. 10 are diagrams of structures of possible communication apparatuses according to this application. These communication apparatuses may be configured to implement the functions of the terminal, the base station, or the central node in the foregoing methods, and therefore can also implement the beneficial effects of the foregoing methods. In this application, when implementing the functions of the terminal, the communication apparatus may be one of the terminals 120a to 120j shown in FIG. 1; and when implementing the functions of the base station, the communication apparatus may be the base station 110a or 110b shown in FIG. 1, or may be a module (for example, a chip) used in a terminal or a base station.

As shown in FIG. 9, a communication apparatus 900 includes a processing unit 910 and a transceiver unit 920. The communication apparatus 900 is configured to implement the functions of the terminal, the base station, or the central node in the method shown in FIG. 4, FIG. 5A and FIG. 5B, FIG. 7A to FIG. 7C, or FIG. 8A to FIG. 8D.

When the communication apparatus 900 is configured to implement the functions of the base station in the method shown in FIG. 4, FIG. 5A and FIG. 5B, FIG. 7A to FIG. 7C, or FIG. 8A to FIG. 8D, the transceiver unit 920 is configured to: send first configuration information to a terminal participating in federated learning, where the first configuration information is used to configure at least one of the following: training duration, a time-frequency resource, and a reporting moment; and same training duration, a same time-frequency resource, and a same reporting moment are configured for different terminals participating in federated learning; and receive a signal obtained through over-the-air superposition of gradients reported by the terminals participating in federated learning, where the gradients are gradients that are of an AI model whose training is completed within the training duration and that are reported by the terminals at the reporting moment by using the time-frequency resource. The processing unit 910 is configured to: generate the first configuration information, and process the gradient reported by the terminal.

When the communication apparatus 900 is configured to implement the functions of the terminal in the method shown in FIG. 4, FIG. 5A and FIG. 5B, FIG. 7A to FIG. 7C, or FIG. 8A to FIG. 8D, the transceiver unit 920 is configured to receive first configuration information from a second node, where the first configuration information is used to configure at least one of the following: training duration, a time-frequency resource, and a reporting moment; and same training duration, a same time-frequency resource, and a same reporting moment are configured for different terminals participating in federated learning; the processing unit 910 is configured to train an AI model within the training duration, to obtain a gradient of the AI model in a current round of model training; and the transceiver unit 920 is further configured to report the gradient of the AI model in the current round of model training to the second node at the reporting moment by using the time-frequency resource.

When the communication apparatus 900 is configured to implement the functions of the central node in the method shown in FIG. 4, FIG. 5A and FIG. 5B, FIG. 7A to FIG. 7C, or FIG. 8A to FIG. 8D, the processing unit 910 is configured to determine second configuration information, where the second configuration information is used to configure at least one of the following: a list of terminals participating in federated learning, an initial AI model, a group temporary identifier, training duration, a terminal quantity threshold, a size of a transport block, or an uplink requirement; and the transceiver unit 920 is configured to send the second configuration information to a second node.

For more detailed descriptions of the processing unit 910 and the transceiver unit 920, directly refer to the related descriptions in the method shown in FIG. 4, FIG. 5A and FIG. 5B, FIG. 7A to FIG. 7C, or FIG. 8A to FIG. 8D. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, or store input data required by the processor 1010 to run the instructions, or store data generated after the processor 1010 runs the instructions.

When the communication apparatus 1000 is configured to implement the foregoing method, the processor 1010 is configured to implement the functions of the processing unit 910, and the interface circuit 1020 is configured to implement the functions of the transceiver unit 920.

When the communication apparatus is a chip used in a terminal, the chip in the terminal implements the functions of the terminal in the foregoing method. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

When the foregoing apparatus is a module used in a central node, the central node implements the functions of the central node in the foregoing method. The central node receives information from another module (for example, a radio frequency module or an antenna) in the central node, where the information is sent by a base station to the central node; or the module in the central node sends information to another module (for example, a radio frequency module or an antenna) in the central node, where the information is sent by the central node to a base station. The module in the central node herein may be a baseband chip or another module in the central node.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or any conventional processor or the like.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or a terminal as discrete components.

A part or all of the methods in this application may be implemented by software, hardware, firmware, or any combination thereof. When software is used to implement the methods, a part or all of the methods may be implemented in a form of a computer program product. The computer program product includes one or more computer programs or instructions. When the computer programs or the instructions are loaded and executed on a computer, the procedures or functions according to this application are completely or partially generated. The computer may be a general-purpose computer, a dedicated computer, a computer network, a network device, user equipment, a core network device, OAM, or another programmable apparatus. The computer programs or the instructions may be stored in a computer-readable storage medium, or may be transmitted from a computer-readable storage medium to another computer-readable storage medium. For example, the computer programs or the instructions may be transmitted from one website, computer, server, or data center to another website, computer, server, or data center in a wired or wireless manner. The computer-readable storage medium may be any usable medium that is accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" usually indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numerals used in this application are merely differentiated for ease of descriptions, but are not used to limit the scope of this application. The sequence numbers of the foregoing processes do not mean execution sequences, and the execution sequences of the processes should be determined based on functions and internal logic of the processes.

**Claims**

1. A method for training an artificial intelligence AI model in a wireless network, comprising:

   sending first configuration information to a terminal participating in federated learning, wherein the first configuration information is used to configure at least one of the following: training duration, a time-frequency resource, or a reporting moment; and same training duration, a same time-frequency resource, or a same reporting moment are configured for different terminals participating in federated learning; and
   receiving a signal obtained through over-the-air superposition of gradients reported by the terminals participating in federated learning, wherein the gradients are gradients that are of an AI model whose training is completed within the training duration and that are reported by the terminals at the reporting moment by using the time-frequency resource.

2. The method according to claim 1, further comprising:

   receiving a training completion indication from the terminal, wherein the training completion indication is sent by the terminal to a second node when the training of the AI model is completed within the training duration; and
   collecting, based on the training completion indication sent by the terminal, statistics on a quantity of terminals that complete the training of the AI model within the training duration.

3. The method according to claim 2, further comprising:

   if the quantity of terminals that complete the training of the AI model is greater than or equal to a terminal quantity threshold, determining an average gradient in a current round of model training based on the gradients reported by the terminals participating in federated learning; or otherwise, using an average gradient in a previous round of model training as an average gradient in a current round of model training; and
   updating a parameter of the AI model based on the average gradient in the current round of model training, and sending the average gradient in the current round of model training to the terminal.

4. The method according to claim 2, further comprising:
   sending, to a first node, a quantity of terminals that complete the training of the AI model within the training duration and the signal obtained through the over-the-air superposition of the gradients reported by the terminals.

5. The method according to any one of claims 1 to 4, wherein the first configuration information is further used to configure at least one of the following:
a dedicated bearer RB resource, a modulation scheme, an initial AI model, or a transmit power.

6. The method according to claim 5, wherein a process of determining the transmit power comprises:

measuring a sounding reference signal SRS from the terminal, to determine uplink channel quality of the terminal; and
determining the transmit power of the terminal based on the uplink channel quality.

7. The method according to any one of claims 1 to 4, wherein the first configuration information is further used to configure at least one of the following:
a dedicated bearer RB resource, a modulation scheme, an initial AI model, a channel state information CSI interval, or a channel inversion parameter.

8. The method according to any one of claims 1 to 7, further comprising:
receiving second configuration information from the first node, wherein the second configuration information is used to configure at least one of the following: a list of terminals participating in federated learning, the initial AI model, a group temporary identifier, the training duration, the terminal quantity threshold, a size of a transport block, or an uplink requirement.

9. The method according to any one of claims 1 to 8, further comprising:

receiving first terminal information from the terminal, and sending second terminal information to the first node, wherein
the first terminal information comprises at least one of the following: a communication capability of the terminal, a computing capability of the terminal, or a data set feature of the terminal; and the second terminal information comprises at least one of the following: the communication capability of the terminal, the computing capability of the terminal, the data set feature of the terminal, or a terminal temporary identifier, wherein the terminal temporary identifier is allocated by the second node to the terminal.

10. The method according to any one of claims 1 to 9, further comprising:

when a model training end condition is met, sending a model training end indication to the terminal; or
receiving a model training end indication from the first node, and forwarding the model training end indication to the terminal.

11. A method for training an artificial intelligence AI model in a wireless network, comprising:

receiving first configuration information from a second node, wherein the first configuration information is used to configure at least one of the following: training duration, a time-frequency resource, and a reporting moment; and same training duration, a same time-frequency resource, and a same reporting moment are configured for different terminals participating in federated learning;
training an AI model within the training duration, to obtain a gradient of the AI model in a current round of model training; and
reporting the gradient of the AI model in the current round of model training to the second node at the reporting moment by using the time-frequency resource.

12. The method according to claim 11, further comprising:
when the training duration ends, if the training of the AI model is completed, sending a training completion indication to the second node.

13. The method according to claim 11 or 12, further comprising:
if the training of the AI model is not completed within the training duration, ending the training of the AI model.

14. The method according to any one of claims 11 to 13, further comprising:

receiving an average gradient in a previous round of model training from the second node; and
updating the gradient of the AI model in the current round of model training based on the average gradient in the previous round of model training; or

updating a parameter and the gradient of the AI model in the current round of model training based on an average gradient in the current round of model training.

15. The method according to any one of claims 11 to 14, wherein the first configuration information is further used to configure at least one of the following:
a dedicated bearer RB resource, a modulation scheme, an initial AI model, or a transmit power.

16. The method according to any one of claims 11 to 14, wherein the first configuration information is further used to configure at least one of the following:
a dedicated bearer RB resource, a modulation scheme, an initial AI model, a channel state information CSI interval, or a channel inversion parameter.

17. The method according to claim 16, wherein when the first configuration information is further used to configure the channel state information CSI interval and the channel inversion parameter, the method further comprises:

if a same frequency resource is configured for a downlink channel and an uplink channel, determining CSI of the uplink channel of the terminal based on measured CSI of the downlink channel; and
if the CSI of the uplink channel meets a requirement of the CSI interval, determining the transmit power based on the channel inversion parameter; and
the reporting the gradient of the AI model in the current round of model training to the second node comprises:
reporting the gradient of the AI model in the current round of model training to the second node based on the determined transmit power.

18. The method according to any one of claims 11 to 17, wherein the first configuration information further comprises a group temporary identifier, and the group temporary identifier is a group temporary identifier allocated by a first node to the terminal.

19. The method according to claim 18, further comprising:

receiving a scheduling indication from the second node, wherein the scheduling indication comprises a group temporary identifier; and
when the group temporary identifier comprised in the scheduling indication is the same as the group temporary identifier allocated by the first node to the terminal, performing the training of the AI model in the current round of model training; or otherwise, skipping performing the training of the AI model in the current round of model training.

20. The method according to any one of claims 11 to 19, further comprising:

receiving a model training end indication from the second node; and
ending the training of the AI model based on the model training end indication.

21. The method according to any one of claims 11 to 20, further comprising:
sending first terminal information to the second node, wherein the first terminal information comprises at least one of the following: a communication capability of the terminal, a computing capability of the terminal, or a data set feature of the terminal.

22. A method for training an artificial intelligence AI model in a wireless network, comprising:

determining second configuration information, wherein the second configuration information is used to configure at least one of the following: a list of terminals participating in federated learning, an initial AI model, a group temporary identifier, training duration, a terminal quantity threshold, a size of a transport block, or an uplink requirement; and
sending the second configuration information to a second node.

23. The method according to claim 22, further comprising:

receiving second terminal information from the second node, wherein the second terminal information comprises at least one of the following: a communication capability of a terminal, a computing capability of the terminal, a data set feature of the terminal, or a terminal temporary identifier, wherein the terminal temporary identifier is allocated by the second node to the terminal; and

determining, based on the terminal information, the list of terminals participating in federated learning.

24. The method according to claim 22 or 23, further comprising:

receiving, from the second node, a signal obtained through over-the-air superposition of gradients reported by the terminals participating in federated learning, and a quantity of terminals that complete training of an AI model within the training duration;

if the quantity of terminals that complete the training of the model within the training duration is greater than or equal to the terminal quantity threshold, determining an average gradient in a current round of model training based on the gradients of the AI model that are reported by the terminals; or otherwise, using an average gradient in a previous round of model training as an average gradient in a current round of model training; and

updating a parameter of the AI model based on the average gradient in the current round of model training, and sending the average gradient in the current round of model training to the second node, to enable the second node to send the average gradient in the current round of model training to the terminal.

25. The method according to any one of claims 22 to 24, further comprising:
sending a scheduling indication to the second node, wherein the scheduling indication comprises a group temporary identifier, and the scheduling indication is used to schedule a terminal corresponding to the group temporary identifier, to perform the training of the AI model in the current round of model training.

26. The method according to any one of claims 22 to 25, further comprising:
when a model training end condition is met, sending a model training end indication to the second node, to indicate the terminal to end the training of the AI model in the current round of model training.

27. An apparatus for training an artificial intelligence AI model in a wireless network, comprising a unit configured to implement the method according to any one of claims 1 to 10.

28. An apparatus for training an artificial intelligence AI model in a wireless network, comprising a processor and a memory, wherein the processor is configured to implement the method according to any one of claims 1 to 10.

29. An apparatus for training an artificial intelligence AI model in a wireless network, comprising a unit configured to implement the method according to any one of claims 11 to 21.

30. An apparatus for training an artificial intelligence AI model in a wireless network, comprising a processor and a memory, wherein the processor is configured to implement the method according to any one of claims 11 to 21.

31. An apparatus for training an artificial intelligence AI model in a wireless network, comprising a unit configured to implement the method according to any one of claims 22 to 26.

32. An apparatus for training an artificial intelligence AI model in a wireless network, comprising a processor and a memory, wherein the processor is configured to implement the method according to any one of claims 22 to 26.

33. A system, comprising the apparatus according to claim 27 or 28 and the apparatus according to claim 29 or 30.

34. The system according to claim 33, further comprising the apparatus according to claim 31 or 32.

35. A computer-readable storage medium, wherein the computer-readable storage medium stores instructions; and when the instructions are run on a computer, the computer is enabled to perform the method according to any one of claims 1 to 10, the method according to any one of claims 11 to 21, or the method according to any one of claims 22 to 26.

36. A computer program product, comprising instructions, wherein when the instructions are run on a computer, the computer is enabled to perform the method according to any one of claims 1 to 10, the method according to any one of claims 11 to 21, or the method according to any one of claims 22 to 26.

**37.** A chip system, comprising a processor or a circuit, configured to perform the method according to any one of claims 1 to 10, the method according to any one of claims 11 to 21, or the method according to any one of claims 22 to 26.

FIG. 1

$$y = f\left(\sum_{i=0}^{n} w_i x_i + b\right)$$

Neuron

$w_0 x_0$

$w_1 x_1$

$w_n x_n$

$y$

FIG. 2a

FIG. 2b

FIG. 2c

① Send an encrypted gradient of a sub-model

② Secure aggregation

③ Send an updated gradient of a model

④ Model update

Central node

Original data

Original data

Original data

Edge node A    Edge node B    Edge node K

FIG. 3

| Base station | Terminal |
|---|---|

401: Send first configuration information, where the first configuration information is used to configure at least one of the following: training duration, a time-frequency resource, or a reporting moment

402: The terminal trains an AI model within the training duration, to obtain a gradient of the AI model in a current round of model training

403: The terminal reports the gradient of the AI model in the current round of model training at the reporting moment by using the time-frequency resource

FIG. 4

| Central node | Base station | Terminal 1 | Terminal n |
|---|---|---|---|

501 — Centrally collect the UE information and then report the UE information to the central node ← Report UE information

502 —
Generate a list of UEs participating in federated learning, training duration, an initial AI model, a UE quantity threshold, and an uplink requirement

Second configuration information, used to configure at least one of the following: the list of UEs, the initial AI model, the training duration, the UE quantity threshold, a size of a transport block, or the uplink requirement →

503 —
Determine a time-frequency resource, a dedicated SRB/DRB resource, and a modulation scheme based on the uplink requirement

First configuration information, used to configure at least one of the following: the initial AI model, the training duration, the time-frequency resource, a dedicated bearer RB resource, or the modulation scheme →

TO FIG. 5B

FIG. 5A

TO FIG. 5B

EP 4 432 711 A1

504

Current round of model training

Current round of model training

◄ If the training is completed within the training duration, report a training completion indication

When the training duration ends, if the training is not completed, end the current round of model training

When the training duration ends, if the training is not completed, end the current round of model training

Collect statistics on a quantity of terminals that complete the current round of model training within the training duration

505       ◄—— Measure uplink ◄—— channel quality

Determine a transmit power and a reporting moment of the terminal based on the uplink channel quality of the terminal

506       —— Third configuration —→ information

507       ◄—— Report a local ◄—— gradient

Calculate an average gradient

—— Deliver an effective —→ average gradient

Determine that a model training end condition is met

508       === End the training ==→

FIG. 5B

EP 4 432 711 A1

FIG. 6

| | Central node | Base station | Terminal 1 | Terminal n |
|---|---|---|---|---|

701 — Centrally collect the UE information and then report the UE information to the central node ← Report UE information

702 — Generate a list of UEs participating in federated learning, training duration, a UE quantity threshold, a CSI interval, a channel inversion parameter, a size of a transport block, or an uplink requirement

Second configuration information, used to configure at least one of the following: the list of UEs, an initial AI model, the training duration, the UE quantity threshold, the CSI interval, the channel inversion parameter, the size of the transport block, or the uplink requirement

TO FIG. 7B

TO FIG. 7B

FIG. 7A

EP 4 432 711 A1

Determine a reporting moment, a time-frequency resource, a dedicated SRB/DRB resource, and a modulation scheme based on the uplink requirement

703

First configuration information,
used to configure at least one of the following: the
— initial AI model, the
— training duration, the reporting moment, the time-frequency resource, a dedicated bearer RB resource, or the modulation scheme

704

Current round of model training

Current round of model training

If the training is completed
— within the training
·· duration, report a training completion indication

Collect statistics on a quantity of UEs that complete the training within the training duration

When the training duration ends, if the training is not completed, end the current round of training

When the training duration ends, if the training is not completed, end the current round of training

FIG. 7B

EP 4 432 711 A1

705

| Measure CSI of a downlink channel, and determine a transmit power of the terminal | Measure CSI of a downlink channel, and determine a transmit power of the terminal |

706

Report a gradient in the current round

Calculate an average gradient

Deliver the average gradient

Determine that a model training end condition is met

707      End the training

FIG. 7C

EP 4 432 711 A1

FIG. 8A

Terminal m | Terminal 1 | Base station 1 | Central node | Base station N | Terminal 1 | Terminal n

801 — Report UE information

Centrally collect the UE information and then report the UE information to the central node

802 — Generate a list of UEs participating in federated learning, a group temporary identifier, an initial AI model, training duration, a terminal quantity threshold, a size of a transport block, or an uplink requirement

Second configuration information, used to configure at least one of the following: the list of UEs, the group temporary identifier, the initial AI model, the training duration, the terminal quantity threshold, the size of the transport block, or the uplink requirement

TO FIG. 8B

803

Determine a reporting moment, a
time-frequency resource,
a dedicated SRB/DRB resource,
and a modulation scheme based
on the uplink requirement

Determine a reporting moment, a
time-frequency resource,
a dedicated SRB/DRB resource,
and a modulation scheme based
on the uplink requirement

First
configuration
information,
used to
configure at
least one of the
following: the
initial AI
model, the
group
temporary
identifier, the
training
duration, the
reporting
moment, the
time-frequency
resource, the
SRB/DRB
resource, or the
modulation
scheme

First
configuration
information,
used to
configure at
least one of the
following: the
initial AI
model, the
group
temporary
identifier, the
training
duration, the
reporting
moment, the
time-frequency
resource, the
SRB/DRB
resource, or the
modulation
scheme

FIG. 8B

804

Scheduling indication

Group scheduling indication

Group scheduling indication

Scheduling indication

| Current round of model training | Current round of model training |
|---|---|

If the training is completed within the training duration, report a training completion indication

| Current round of model training | Current round of model training |
|---|---|

If the training is completed within the training duration, report a training completion indication

| When the training duration ends, if the training is not completed, end the current round of model training | When the training duration ends, if the training is not completed, end the current round of model training | Collect statistics on a quantity of UEs that complete the training within the training duration |
|---|---|---|

| Collect statistics on a quantity of UEs that complete the training within the training duration | When the training duration ends, if the training is not completed, end the current round of model training | When the training duration ends, if the training is not completed, end the current round of model training |
|---|---|---|

Report the quantity of UEs

Report the quantity of UEs

FIG. 8C

EP 4 432 711 A1

805

806

Measure a channel

Measure CSI of a downlink channel, and determine a transmit power of the terminal

Third configuration information

Measure a channel

Measure CSI of a downlink channel, and determine a transmit power of the terminal

Third configuration information

Report a local gradient

Report a local gradient

Report a local gradient

Report a local gradient

Calculate an average gradient

Deliver an effective average gradient

Deliver an effective average gradient

Deliver an effective average gradient

Deliver an effective average gradient

807

Determine that a model training end condition is met

End the training

End the training

End the training

End the training

FIG. 8D

EP 4 432 711 A1

Communication apparatus
900

Processing unit 910

Transceiver unit 920

FIG. 9

Communication apparatus 1000

Processor 1010

Interface circuit
1020

Memory 1030

FIG. 10

## INTERNATIONAL SEARCH REPORT

| | International application No. |
|---|---|
| | **PCT/CN2022/137671** |

**A. CLASSIFICATION OF SUBJECT MATTER**

H04W8/22(2009.01)i;H04W8/24(2009.01)i;H04L41/14(2022.01)i;G06N3/04(2023.01)i;G06N3/06(2006.01)i;G06N3/08(2023.01)i;G06N20/20(2019.01)i

According to International Patent Classification (IPC) or to both national classification and IPC

**B. FIELDS SEARCHED**

Minimum documentation searched (classification system followed by classification symbols)

IPC: H04W H04L G06N

Documentation searched other than minimum documentation to the extent that such documents are included in the fields searched

Electronic data base consulted during the international search (name of data base and, where practicable, search terms used)

CNABS; CNTXT; CNKI; IEEE; VEN; USTXT; WOTXT; EPTXT: 无线网络, 接入网设备, 中心节点, 终端, 人工智能, 模型, 联邦学习, 配置, 分配, 训练, 时长, 资源, 上报, 时刻, 相同, 梯度, 叠加, 信号, 减少, 占用, 降低, 延时, wireless network, access network equipment, central node, terminal, artificial intelligence, AI, model, federal learning, FL, configuration, allocation, training, duration, resource, reporting, time, same, gradient, superposition, signal, decrease, occupancy, latency

**C. DOCUMENTS CONSIDERED TO BE RELEVANT**

| Category* | Citation of document, with indication, where appropriate, of the relevant passages | Relevant to claim No. |
|---|---|---|
| X | CN 113139663 A (SHENZHEN RESEARCH INSTITUTE OF BIG DATA et al.) 20 July 2021 (2021-07-20) description, paragraphs [0002]-[0268] | 22, 23, 25, 26, 31, 32, 35-37 |
| Y | CN 113139662 A (SHENZHEN RESEARCH INSTITUTE OF BIG DATA et al.) 20 July 2021 (2021-07-20) description, paragraphs [0002]-[0185] | 1-21, 24, 27-30, 33-37 |
| Y | CN 113139663 A (SHENZHEN RESEARCH INSTITUTE OF BIG DATA et al.) 20 July 2021 (2021-07-20) description, paragraphs [0002]-[0268] | 1-21, 24, 27-30, 33-37 |
| A | CN 111522669 A (SHENZHEN QIANHAI WEBANK CO., LTD.) 11 August 2020 (2020-08-11) entire document | 1-37 |

☑ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 February 2023** | **03 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/137671**

**C.    DOCUMENTS CONSIDERED TO BE RELEVANT**

| Category* | Citation of document, with indication, where appropriate, of the relevant passages | Relevant to claim No. |
|---|---|---|
| A | CN 113516250 A (BEIJING BAIDU NETCOM SCIENCE AND TECHNOLOGY CO., LTD.) 19 October 2021 (2021-10-19) entire document | 1-37 |

Form PCT/ISA/210 (second sheet) (July 2022)

INTERNATIONAL SEARCH REPORT
Information on patent family members

International application No.

**PCT/CN2022/137671**

| Patent document cited in search report | | | Publication date (day/month/year) | Patent family member(s) | | | Publication date (day/month/year) |
|---|---|---|---|---|---|---|---|
| CN | 113139663 | A | 20 July 2021 | None | | | |
| CN | 113139662 | A | 20 July 2021 | None | | | |
| CN | 111522669 | A | 11 August 2020 | WO | 2021219054 | A1 | 04 November 2021 |
| CN | 113516250 | A | 19 October 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111505116